# FASCICULE DE BREVET EUROPEEN

(11) **EP 3 924 254 B1**
(45) Date de publication et mention de la délivrance du brevet: **07.12.2022**
(21) Numéro de dépôt: 20726187.6
(22) Date de dépôt: 13.03.2020
(51) Int. Cl.: B64D 29/06, F02K 1/72, F02K 1/76, B64D 33/02

(54) **NACELLE POUR TURBOMACHINE À DOUBLE FLUX D'AÉRONEF, COMPRENANT UN INVERSEUR DE POUSSÉE**
GONDEL FÜR EINE BYPASS-TURBOMASCHINE EINES FLUGZEUGS MIT EINER SCHUBUMKEHRVORRICHTUNG
NACELLE FOR AN AIRCRAFT BYPASS TURBOMACHINE, COMPRISING A THRUST REVERSER

(30) Priorité: 19.03.2019 FR 1902796
(43) Date de publication de la demande: 22.12.2021
(73) Titulaire: SAFRAN AIRCRAFT ENGINES, 75015 Paris (FR)
(72) Inventeur: GLEMAREC, Guillaume, 77550 MOISSY-CRAMAYEL (FR); GARNAUD, Quentin Matthias Emmanuel, 77550 MOISSY-CRAMAYEL (FR)
(74) Mandataire: Brevalex
(86) Numéro de dépôt international: PCT/FR2020/050529
(87) Numéro de publication internationale: WO 2020/188200

(56) Documents cités:
- WO-A1-2013/186475
- WO-A1-2015/019007
- US-B1- 10 119 495

## Description

### DOMAINE TECHNIQUE

L'invention se rapporte à une nacelle pour turbomachine à double flux comprenant un inverseur de poussée, à une turbomachine à double flux comprenant une telle nacelle, ainsi qu'à un aéronef comprenant au moins une telle turbomachine.

### ÉTAT DE LA TECHNIQUE ANTÉRIEURE

De manière classique, une turbomachine à double flux d'aéronef comprend une soufflante destinée à aspirer un flux de gaz qui se divise, en aval de la soufflante, en un flux de gaz primaire circulant dans un canal d'écoulement de flux primaire, appelé veine primaire, au sein d'un cœur de la turbomachine, et en un flux de gaz secondaire contournant ce cœur dans un canal d'écoulement de flux secondaire, appelé veine secondaire.

Dans la veine primaire, le flux de gaz primaire traverse, d'amont en aval, un compresseur basse pression, un compresseur haute pression, une chambre de combustion, une turbine haute pression, une turbine basse pression et une tuyère d'échappement. Dans la veine secondaire, le flux de gaz secondaire peut traverser un redresseur de flux.

Le flux de gaz primaire et le flux de gaz secondaire participent tous deux à produire la poussée totale de la turbomachine, qui est ainsi particulièrement importante.

La turbomachine est en outre carénée par une nacelle qui entoure la veine secondaire et qui définit, en amont, une manche à air par laquelle le flux de gaz pénètre à l'intérieur de la turbomachine.

Or, s'il est avantageux pour certaines phases de vol de l'aéronef et à certains régimes de la turbomachine de produire une poussée totale aussi importante, cela a plutôt tendance à poser des problèmes pour d'autres phases de vol et à d'autres régimes tels que le régime de ralenti.

C'est par exemple le cas en phase d'atterrissage, lorsque l'aéronef se rapproche du sol et tourne au régime de ralenti, une descente rapide au sol de l'aéronef étant rendue difficile.

C'est aussi le cas en phase d'atterrissage, lorsque l'aéronef a touché la piste d'atterrissage, au sol. Il est en effet nécessaire de suppléer les freins de l'aéronef par un inverseur de poussée monté sur la nacelle de la turbomachine pour diminuer la distance de freinage de l'aéronef sur la piste d'atterrissage. Pour cela, l'inverseur de poussée est prévu pour évacuer, vers l'extérieur, le flux de gaz s'écoulant dans la veine secondaire, en le dirigeant vers l'amont de la nacelle et ainsi créer une contre-poussée ou poussée négative.

Toutefois, l'utilisation de l'inverseur de poussée n'est autorisée que pour des vitesses de l'aéronef supérieures à une vitesse limite prédéfinie, par exemple de 60 nœuds (111.12 km/h). En-dessous de cette vitesse limite, il existe en effet des risques trop élevés d'une part de ré-ingestion par la turbomachine du flux de gaz évacué par l'inverseur de poussée vers l'amont de la nacelle, et d'autre part d'ingestion de débris provenant de la piste d'atterrissage et soulevés par le flux de gaz évacué par l'inverseur de poussée, qui peuvent toutes deux mener à un endommagement de la turbomachine.

C'est encore le cas pour assurer l'arrêt au sol de l'aéronef, le freinage de l'aéronef étant obligatoire pour garder l'aéronef immobile, ou bien même en phase de roulage sur la piste d'atterrissage, au sol, où seul le freinage de l'aéronef permet de réguler la vitesse de l'aéronef, l'utilisation de l'inverseur de poussée étant restreinte à des vitesses de l'aéronef supérieures à la vitesse limite.

WO 2013/186475 se rapporte à un inverseur de poussée pour nacelle de turboréacteur comprenant au moins un capot mobile en translation selon une direction sensiblement parallèle à un axe longitudinal de la nacelle, ledit capot mobile étant en outre prolongé par au moins une partie formant tuyère variable mobile associée à au moins un moyen d'entraînement en translation selon une direction sensiblement longitudinale de la nacelle, caractérisée en ce que les moyens de déviation sont montés mobiles entre une position rétractée, et une position active dans laquelle ils sont déplacés vers l'aval de manière à pouvoir s'étendre à travers un passage ouvert par le capot mobile dans la nacelle, et en ce que lesdits moyens de déviation sont associés à au moins un moyen d'entraînement dissociable du moyen d'entraînement de la tuyère variable.

### EXPOSÉ DE L'INVENTION

L'invention vise à pallier les inconvénients mentionnés ci-dessus en proposant une nacelle pour turbomachine à double flux d'aéronef comprenant un inverseur de poussée qui est apte à fonctionner d'une part en inversion de poussée, et d'autre part en annulation partielle ou totale de poussée.

Plus précisément, l'invention a pour objet une nacelle destinée à une turbomachine à double flux d'aéronef dans laquelle un flux d'air entrant s'écoule d'amont en aval en se séparant en un canal d'écoulement de flux primaire et un canal d'écoulement de flux secondaire, la nacelle comprenant :
- une enveloppe annulaire fixe s'étendant autour d'un axe longitudinal de la nacelle,
- un inverseur de poussée comprenant :
   ∘ un capot mobile annulaire s'étendant autour de l'axe longitudinal et situé en aval de l'enveloppe annulaire, le capot mobile étant apte à coulisser par rapport à l'enveloppe annulaire suivant l'axe longitudinal entre une position fermée, dans laquelle le capot mobile et l'enveloppe annulaire définissent ensemble une surface extérieure annulaire et continue de la nacelle, et une position ouverte dans laquelle le capot mobile et l'enveloppe annulaire définissent entre eux une ouverture orientée radialement par rapport à l'axe longitudinal, ladite ouverture s'étendant circonférentiellement autour de l'axe longitudinal,
   ∘ au moins une première grille mobile d'inversion de poussée, apte à occuper une position rentrée dans laquelle, le capot mobile étant en position fermée, la première grille est logée dans l'enveloppe annulaire, et une position sortie dans laquelle, le capot mobile étant en position ouverte, la première grille s'étend en travers de l'ouverture, de telle façon qu'au moins une partie du flux secondaire est apte à traverser la première grille en position sortie pour ressortir à l'extérieur de la nacelle avec une vitesse orientée de façon à générer suivant l'axe longitudinal une poussée négative, le capot mobile et la ou chaque première grille étant reliés à un mécanisme d'actionnement apte à les déplacer conjointement, ledit mécanisme d'actionnement étant en outre conçu pour permettre une configuration d'annulation de poussée, partielle ou totale, de l'inverseur de poussée dans laquelle le capot mobile est déplacé dans sa position ouverte tout en maintenant la ou chaque première grille dans sa position rentrée, l'ouverture étant occupée par au moins une deuxième grille d'atténuation de poussée de l'inverseur de poussée, dans ladite configuration d'annulation de poussée, de façon à ce que le flux secondaire traversant l'ouverture ressorte à l'extérieur de la nacelle avec une vitesse orientée de façon à générer suivant l'axe longitudinal une poussée sensiblement nulle ou positive.

Selon des variantes de réalisation qui peuvent être prises ensemble ou séparément dans la mesure où elles entrent dans le cadre des revendications annexées:
- la ou les premières grilles sont conçues pour renvoyer un flux de gaz circulant d'amont en aval dans la veine secondaire vers l'extérieur et vers l'amont de la nacelle ;
- la ou les premières grilles présentent des ailettes formant avec l'axe longitudinal un premier angle compris entre 110 et 150°, notamment égal à 120°, une extrémité radialement interne des ailettes, par rapport à l'axe longitudinal, étant située vers l'aval, une extrémité radialement externe des ailettes, par rapport à l'axe longitudinal, étant située vers l'amont ;
- la ou les deuxièmes grilles sont conçues pour renvoyer un flux de gaz circulant d'amont en aval dans la veine secondaire vers l'extérieur et vers l'aval de la nacelle ;
- la ou les deuxièmes grilles présentent des ailettes formant avec l'axe longitudinal un deuxième angle compris entre 30 et 60°, notamment égal à 45°, une extrémité radialement interne des ailettes, par rapport à l'axe longitudinal, étant située vers l'amont, une extrémité radialement externe des ailettes, par rapport à l'axe longitudinal, étant située vers l'aval ;
- l'inverseur de poussée comprend en outre au moins une porte d'inverseur conçue pour se déplacer depuis une position rétractée dans laquelle la ou les portes d'inverseur sont destinées à libérer la veine secondaire, vers une position déployée dans laquelle la ou les portes d'inverseur sont destinées à obturer axialement la veine secondaire, lorsque le capot coulisse depuis la position fermée vers la position ouverte ;
- le mécanisme d'actionnement est conçu pour sélectivement :
   ∘ déplacer le capot mobile et la ou les premières grilles en coulissement suivant l'axe longitudinal respectivement depuis la position fermée vers la position ouverte et depuis la position rentrée vers la position sortie,
   ∘ maintenir la ou les premières grilles en position rentrée et déplacer le capot mobile en coulissement suivant l'axe longitudinal entre la position fermée et la position ouverte ;
- le mécanisme d'actionnement comprend au moins un premier actionneur conçu pour entraîner en coulissement le capot mobile suivant l'axe longitudinal entre la position fermée et la position ouverte ;
- le mécanisme d'actionnement comprend au moins un premier organe de blocage conçu pour bloquer en coulissement la ou les premières grilles par rapport au capot mobile suivant l'axe longitudinal, dans une première position de blocage, et pour libérer la ou les premières grilles en coulissement par rapport au capot mobile suivant l'axe longitudinal, dans une deuxième position de blocage ;
- le mécanisme d'actionnement comprend au moins un deuxième organe de blocage conçu pour libérer la ou les premières grilles en coulissement par rapport à l'enveloppe annulaire suivant l'axe longitudinal, dans une troisième position de blocage, et pour bloquer la ou les premières grilles en coulissement par rapport à l'enveloppe annulaire suivant l'axe longitudinal, la ou les premières grilles étant en position rentrée, dans une quatrième position de blocage ;
- la ou chaque deuxième grille d'atténuation de poussée est conçue pour sélectivement :
   ∘ occuper une position rentrée dans laquelle elle est logée dans l'enveloppe annulaire de la nacelle, ladite deuxième grille en position rentrée étant radialement superposée par rapport à l'axe longitudinal avec une première grille lorsque le capot mobile est en position fermée,
   ∘ rester dans la position rentrée lorsque le capot mobile et la première grille coulissent respectivement depuis la position fermée vers la position ouverte et depuis la position rentrée vers la position sortie,
   ∘ coulisser par rapport à l'enveloppe annulaire de la nacelle suivant l'axe longitudinal depuis la position rentrée vers une position sortie dans laquelle la deuxième grille occupe l'ouverture définie entre le capot mobile et l'enveloppe annulaire, lorsque la première grille est en position rentrée et que le capot mobile coulisse depuis la position fermée vers la position ouverte ;
- la ou les deuxièmes grilles sont agencées radialement à l'extérieur de la ou des premières grilles par rapport à l'axe longitudinal ;
- le mécanisme d'actionnement est conçu pour sélectivement :
   ∘ maintenir la ou les deuxièmes grilles en position rentrée et déplacer le capot mobile et la ou les premières grilles en coulissement suivant l'axe longitudinal respectivement depuis la position fermée vers la position ouverte et depuis la position rentrée vers la position sortie,
   ∘ maintenir la ou les premières grilles en position rentrée et déplacer le capot mobile et la ou les deuxièmes grilles en coulissement suivant l'axe longitudinal respectivement depuis la position fermée vers la position ouverte et depuis la position rentrée vers la position sortie ;
- le mécanisme d'actionnement comprend au moins un premier organe de blocage conçu pour :
   ∘ d'une part, bloquer en coulissement la ou les premières grilles par rapport au capot mobile suivant l'axe longitudinal, dans une première position de blocage, et libérer la ou les premières grilles en coulissement par rapport au capot mobile suivant l'axe longitudinal, dans une deuxième position de blocage, et
   ∘ d'autre part, libérer la ou les deuxièmes grilles en coulissement par rapport au capot mobile suivant l'axe longitudinal, dans la première position de blocage, et bloquer en coulissement la ou les deuxièmes grilles par rapport au capot mobile suivant l'axe longitudinal, dans la deuxième position de blocage ;
- le mécanisme d'actionnement comprend au moins un deuxième organe de blocage conçu pour :
   ∘ d'une part, libérer la ou les premières grilles en coulissement par rapport à l'enveloppe annulaire suivant l'axe longitudinal, dans une troisième position de blocage, et bloquer la ou les premières grilles en coulissement par rapport à l'enveloppe annulaire suivant l'axe longitudinal, la ou les premières grilles étant en position rentrée, dans une quatrième position de blocage,
   ∘ d'autre part, bloquer la ou les deuxièmes grilles en coulissement par rapport à l'enveloppe annulaire suivant l'axe longitudinal, la ou les deuxièmes grilles étant en position rentrée, dans la troisième position de blocage, et libérer la ou les deuxièmes grilles en coulissement par rapport à l'enveloppe annulaire suivant l'axe longitudinal, dans la quatrième position de blocage.

L'invention a encore pour objet une turbomachine à double flux d'aéronef comprenant, d'amont en aval suivant une direction axiale d'écoulement d'un gaz, une soufflante et un bec de séparation duquel sont issus un canal d'écoulement de flux primaire annulaire, dit veine primaire, et un canal d'écoulement de flux secondaire annulaire, dit veine secondaire, entourant la veine primaire, la turbomachine étant en outre carénée par une nacelle telle que précédemment décrite.

L'invention a aussi pour objet un aéronef comprend au moins une turbomachine à double flux telle que précédemment décrite.

### BRÈVE DESCRIPTION DES DESSINS

D'autres aspects, buts, avantages et caractéristiques de l'invention apparaîtront mieux à la lecture de la description détaillée suivante de formes de réalisation préférés de celle-ci, donnée à titre d'exemple non limitatif, et faite en référence aux dessins annexés sur lesquels :
- la figure 1 est une vue en coupe longitudinale d'une turbomachine à double flux d'aéronef comprenant un inverseur de poussée fonctionnant en jet direct, selon un mode de réalisation de l'invention ;
- la figure 2 est une vue en coupe longitudinale de la turbomachine à double flux illustrée à la figure 1, l'inverseur de poussée fonctionnant en inversion de poussée ;
- la figure 3 est une vue en coupe longitudinale de la turbomachine à double flux illustrée aux figures 1 et 2, l'inverseur de poussée fonctionnant en annulation partielle de poussée ;
- la figure 4 est une vue en coupe longitudinale de la turbomachine à double flux illustrée aux figures 1 à 3, l'inverseur de poussée fonctionnant en annulation totale de poussée ;
- la figure 5 est une vue de la turbomachine à double flux illustrée à la figure 1 suivant la coupe transversale A-A ;
- la figure 6 est une vue de détail, en coupe longitudinale, de l'inverseur de poussée illustré aux figures 1 à 4, des deuxièmes organes de blocage étant en troisième position de blocage ;
- la figure 7 est une vue de détail, en coupe longitudinale, de l'inverseur de poussée illustré aux figures 1 à 4, les deuxièmes organes de blocage étant en quatrième position de blocage ;
- la figure 8 est une vue en coupe longitudinale d'une turbomachine à double flux d'aéronef comprenant un inverseur de poussée fonctionnant en jet direct, selon un exemple ne faisant pas partie de l'invention revendiquée;
- la figure 9 est une vue en perspective de la turbomachine à double flux d'aéronef de la figure 8, l'inverseur de poussée fonctionnant en jet direct ;
- la figure 10 est une vue en coupe longitudinale de la turbomachine à double flux illustrée aux figures 8 et 9, l'inverseur de poussée fonctionnant en inversion de poussée ;
- la figure 11 est une vue en perspective de la turbomachine à double flux illustrée aux figures 8 et 9, l'inverseur de poussée fonctionnant en inversion de poussée ;
- la figure 12 est une vue en coupe longitudinale de la turbomachine à double flux illustrée aux figures 8 à 11, l'inverseur de poussée fonctionnant en annulation partielle de poussée ;
- la figure 13 est une vue en coupe longitudinale de la turbomachine à double flux illustrée aux figures 8 à 12, l'inverseur de poussée fonctionnant en annulation totale de poussée ;
- la figure 14 est une vue en perspective de la turbomachine à double flux illustrée aux figures 8 à 13, l'inverseur de poussée fonctionnant en annulation totale de poussée ;
- la figure 15 est une vue en perspective d'une turbomachine à double flux d'aéronef comprenant un inverseur de poussée fonctionnant en jet direct, selon un autre exemple ne faisant pas partie de l'invention revendiquée.

### DESCRIPTION DÉTAILLÉE

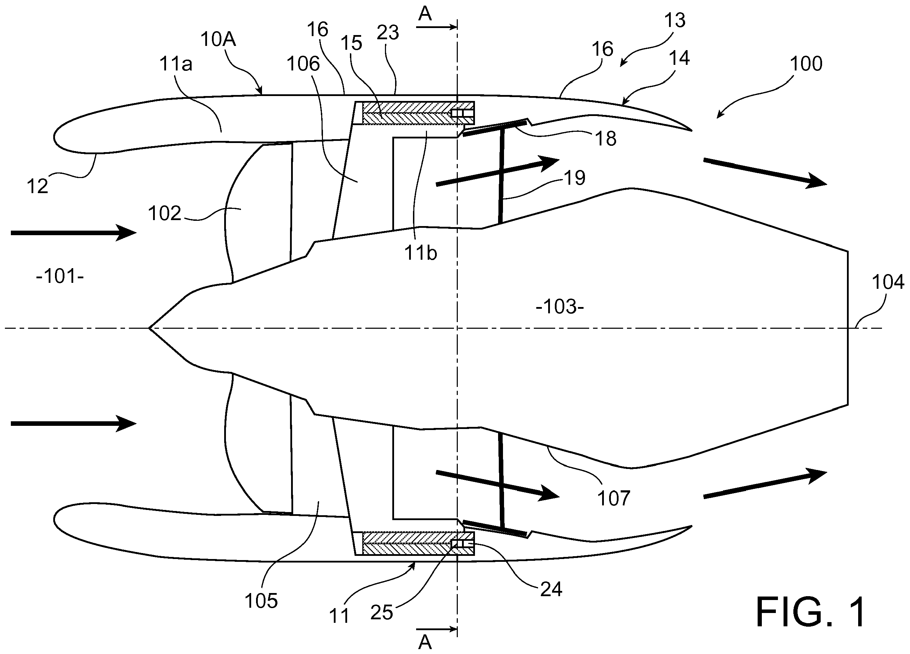

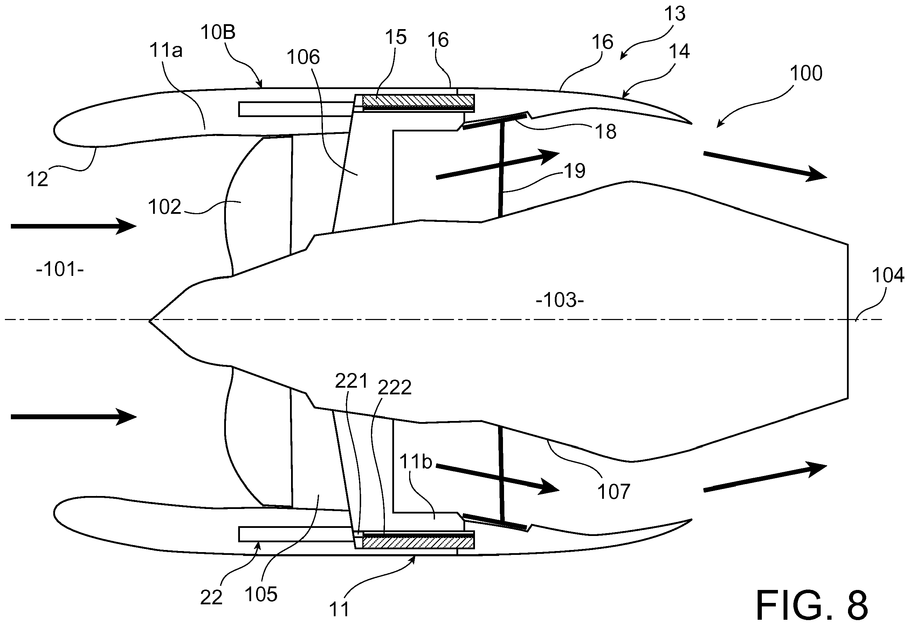

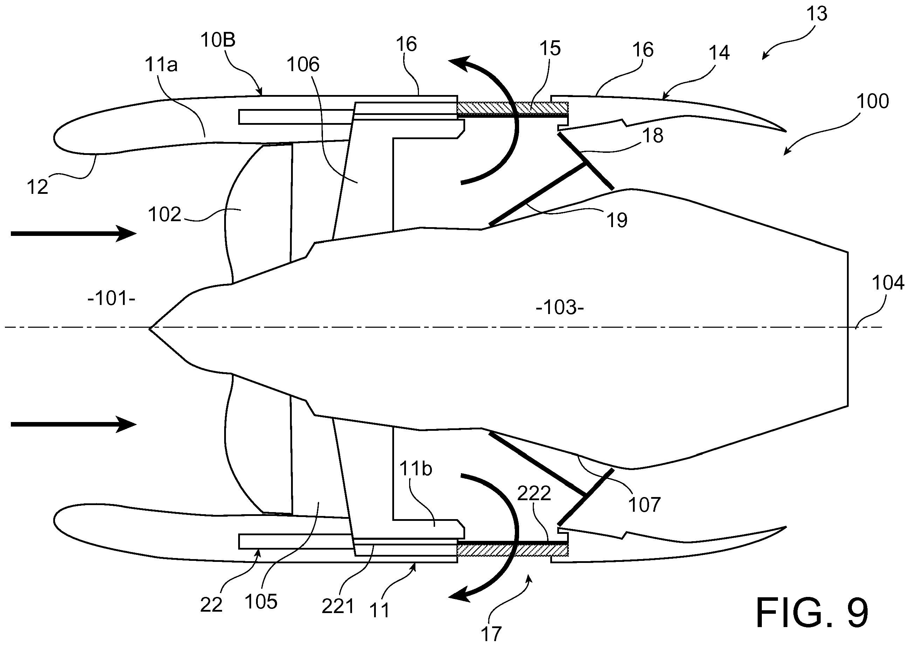

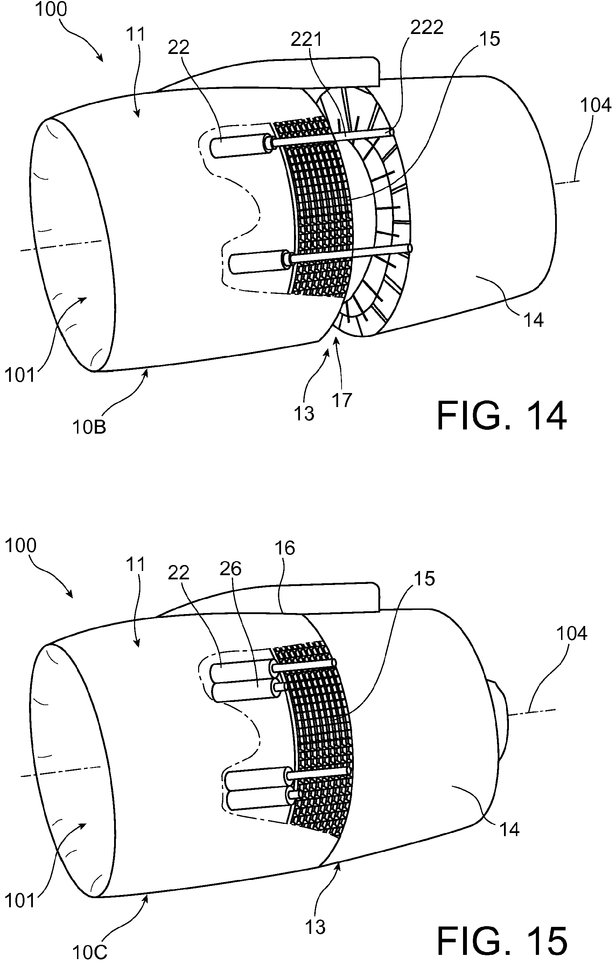

Les figures 1 à 7 montrent une turbomachine 100 à double flux d'aéronef comprenant une nacelle 10A selon un mode de réalisation de l'invention. Les figures 8 à 14 montrent la turbomachine 100 comprenant une nacelle 10B selon un exemple ne faisant pas partie de l'invention revendiquée. La figure 15 montre la turbomachine 100 comprenant une nacelle 10C selon un autre exemple ne faisant pas partie de l'invention revendiquée. Les composants communs à ces trois modes de réalisation portent les mêmes références.

A titre préliminaire, il est défini une direction axiale, une direction radiale qui est orthogonale à la direction axiale et une direction circonférentielle qui est orthogonale aux directions axiale et radiale.

La turbomachine 100 comprend, d'amont en aval dans le sens d'écoulement d'air suivant la direction axiale, une soufflante 102 et un bec de séparation (non représenté) duquel sont issus un canal d'écoulement de flux primaire (non représenté) annulaire, appelé veine primaire, ménagé au sein d'un cœur 103 de la turbomachine 100 s'étendant suivant un axe longitudinal 104 orienté axialement, et un canal d'écoulement de flux secondaire 105 annulaire, appelé veine secondaire, entourant la veine primaire (figures 1 et 8). La veine primaire et la veine secondaire 105 sont centrées sur l'axe longitudinal 104. La nacelle 10A, 10B, 10C qui entoure la turbomachine 100 comprend une lèvre annulaire d'entrée d'air 101 à l'intérieur de laquelle passe un flux d'air entrant 101 en direction de la soufflante 102.

La veine primaire comprend elle-même, d'amont en aval, un compresseur basse pression, un compresseur haute pression, une chambre de combustion, une turbine haute pression, une turbine basse pression et une tuyère d'échappement. La veine secondaire 105 comprend un redresseur de flux 106 (figures 1 et 8) comportant un aubage d'ailettes de redressement du flux provenant de la soufflante 102.

Le flux de gaz circulant dans chacune des veines primaire et secondaire participe à la production d'une poussée totale de la turbomachine 100.

La turbomachine 100 est en outre carénée par la nacelle 10A, 10B, 10C, qui présente une forme annulaire, qui s'étend autour de l'axe longitudinal 104 et qui entoure la veine secondaire 105.

La nacelle 10A, 10B, 10C comprend une enveloppe annulaire 11 extérieure s'étendant autour de l'axe longitudinal 104 et formant une surface extérieure continue de la nacelle 10A, 10B, 10C. L'enveloppe annulaire 11 de la nacelle 10A, 10B, 10C est formée par un capot ou plusieurs capots assemblés, et constitue une enveloppe fixe qui s'étend de l'amont vers l'aval depuis la lèvre annulaire d'entrée d'air 101 jusqu'à une portion de l'enveloppe annulaire 11 à l'intérieur de laquelle sont logées des grilles 15, 23 coulissantes d'un inverseur de poussée 13.

La surface intérieure 12 de la nacelle 10A, 10B, 10C est par exemple formée par un carter de soufflante 11a qui entoure la soufflante 102 et par une virole extérieure d'un carter intermédiaire 11b qui est situé en aval de la soufflante 102. L'enveloppe annulaire 11 entoure ainsi le carter de soufflante 11a et le carter intermédiaire 11b. Le carter intermédiaire 11b porte par exemple aussi le redresseur de flux 106.

La turbomachine 100 présente par exemple un taux de dilution élevé, notamment supérieur à 10. Ce taux de dilution, qui est aussi appelé « BPR » (de l'anglais « By-Pass Ratio »), correspond au sens conventionnel du terme, tel qu'il est notamment défini en anglais par l'EASA (de l'anglais « European Aviation Safety Agency »), à savoir : « The ratio of the air mass flow through the by-pass ducts of a gas turbine engine to the air mass flow through the engine core, calculated at maximum thrust when the engine is stationary in an international standard atmosphere at sea lever », pouvant être traduit de la façon suivante : « le rapport du débit de masse d'air à travers les conduits de dérivation d'un moteur à turbine à gaz, sur le débit de masse d'air à travers le cœur du moteur, calculé à la poussée maximale lorsque le moteur est stationnaire dans une atmosphère standard internationale au niveau de la mer ».

La nacelle 10A, 10B, 10C comprend en outre un inverseur de poussée 13 comprenant lui-même un capot mobile 14 annulaire s'étendant autour de l'axe longitudinal 104 et situé en aval de l'enveloppe annulaire 11 de la nacelle 10A, 10B, 10C, ainsi qu'au moins une première grille 15 d'inversion de poussée. Le cas échéant, le capot mobile 14 est aussi situé en aval de la virole extérieure du carter intermédiaire 11b.

Le capot mobile 14 est mobile en coulissement par rapport à l'enveloppe annulaire 11 qui est fixe, suivant l'axe longitudinal 104, entre une position fermée et une position ouverte.

En position fermée (figures 1, 8 et 15), le capot mobile 14 et l'enveloppe annulaire 11 définissent ensemble une surface extérieure 16 annulaire et continue. Il est entendu par « surface continue » qu'en position fermée, un bord extérieur amont du capot mobile 14 et un bord extérieur aval de l'enveloppe annulaire 11 sont en contact l'un avec l'autre, sur toute leur circonférence autour de l'axe longitudinal 104.

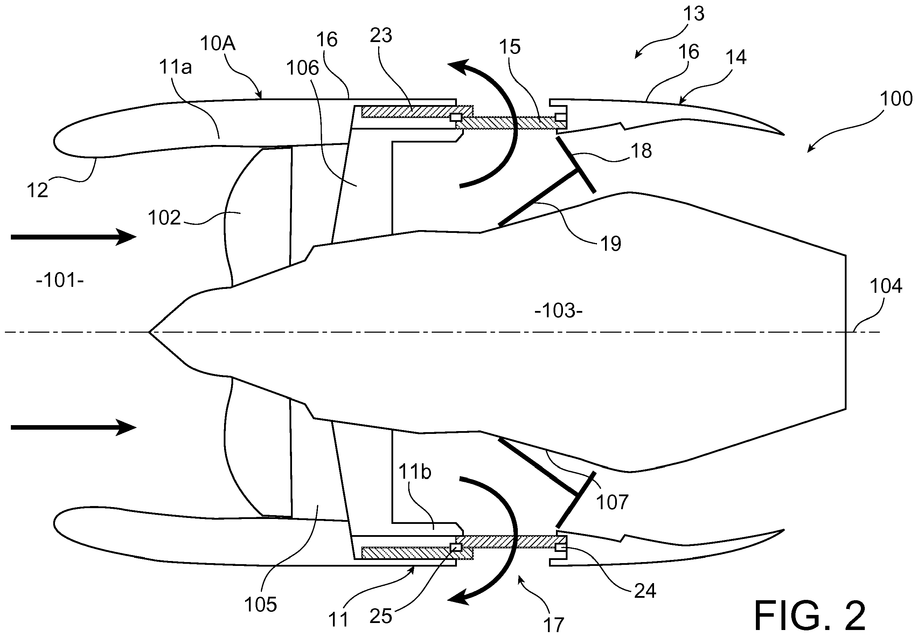

En position ouverte (figures 2 à 4 et 10 à 14), le capot mobile 14 et l'enveloppe annulaire 11 définissent entre eux une ouverture 17 radiale, par rapport à l'axe longitudinal 104, s'étendant circonférentiellement autour de l'axe longitudinal 104. La surface extérieure 16 définie par le capot mobile 14 et l'enveloppe annulaire 11 n'est donc plus continue, le bord extérieur amont du capot mobile 14 et le bord extérieur aval de l'enveloppe annulaire 11 étant écartés longitudinalement l'un de l'autre, de sorte à définir l'ouverture 17. En position ouverte, le flux de gaz provenant de la veine secondaire 105 s'évacue vers l'extérieur à travers l'ouverture 17 formée entre le capot mobile 14 de l'inverseur de poussée 13 et l'enveloppe annulaire 11.

Par exemple, les premières grilles 15 de l'inverseur de poussée 13 sont régulièrement réparties autour de l'axe longitudinal 104. Chacune des premières grilles 15 occupe un secteur angulaire autour de l'axe longitudinal 104.

Les premières grilles 15 sont mobiles. Elles sont en outre conçues pour sélectivement :
- occuper une position rentrée, lorsque le capot mobile 14 est en position fermée ;
- coulisser par rapport à l'enveloppe annulaire 11 suivant l'axe longitudinal 104 depuis la position rentrée vers une position sortie, lorsque le capot mobile 14 coulisse lui-même depuis la position fermée vers la position ouverte, et depuis la position sortie vers la position rentrée, lorsque le capot mobile 14 coulisse lui-même depuis la position ouverte vers la position fermée ;
- occuper la position rentrée, lorsque le capot mobile 14 coulisse entre la position fermée et la position ouverte.

En position rentrée (figures 1, 4, 5, 8, 9 et 12 à 14), les premières grilles 15 sont logées dans l'enveloppe annulaire 11. L'enveloppe annulaire 11 entoure ainsi les premières grilles 15. De cette manière, les premières grilles 15 ne sont traversées par aucun flux de gaz provenant de la veine secondaire 105.

Lorsque le capot mobile 14 est en position fermée et que les premières grilles 15 sont en position rentrée, l'inverseur de poussée 13 occupe un premier état et fonctionne en jet direct (figures 1, 8, 9 et 15).

En position sortie (figures 2, 10 et 11), les premières grilles 15 sont situées hors de l'enveloppe annulaire 11 et ferment l'ouverture 17 définie entre l'enveloppe annulaire 11 et le capot mobile 14 en position ouverte. Les premières grilles 15 s'étendent en travers de ladite ouverture 17.

Lorsque le capot mobile 14 est en position ouverte et que les premières grilles 15 sont en position sortie, l'inverseur de poussée 13 occupe un deuxième état et fonctionne en inversion de poussée (figures 2, 10 et 11). Le flux de gaz provenant de la veine secondaire 105 s'évacue vers l'extérieur à travers les premières grilles 15 qui dirigent ledit flux de gaz vers l'amont de la nacelle 10A, 10B, 10C. Ainsi, une partie du flux de gaz provenant de la veine secondaire 105 traverse les premières grilles 15 pour ressortir à l'extérieur de la nacelle 10A, 10B, 10C avec une vitesse orientée de façon à générer un poussée négative suivant l'axe longitudinal 104. Dans le deuxième état, l'inverseur de poussée 13 prélève donc le flux de gaz circulant dans la veine secondaire 105 pour produire une contre-poussée ou encore une poussée négative orientée vers l'amont de la nacelle 10A, 10B, 10C. Il est entendu par « poussée négative » une force propulsive dirigée dans le sens opposé à l'avancement de l'aéronef.

Lorsque l'inverseur de poussée 13 occupe le deuxième état, les premières grilles 15 sont ainsi conçues pour prélever le flux de gaz provenant de la veine secondaire 105 et pour renvoyer ledit flux de gaz vers l'extérieur et vers l'amont de la nacelle 10A, 10B, 10C.

Pour cela, les premières grilles présentent des ailettes formant par exemple avec l'axe longitudinal 104 un premier angle compris entre 110° et 150°, notamment égal à 120°, une extrémité radialement interne des ailettes, par rapport à l'axe longitudinal 104, étant située vers l'aval, une extrémité radialement externe des ailettes, par rapport à l'axe longitudinal 104, étant située vers l'amont. Les ailettes sont ainsi inclinées, d'amont en aval suivant la direction axiale, depuis l'extérieur vers l'intérieur suivant la direction radiale.

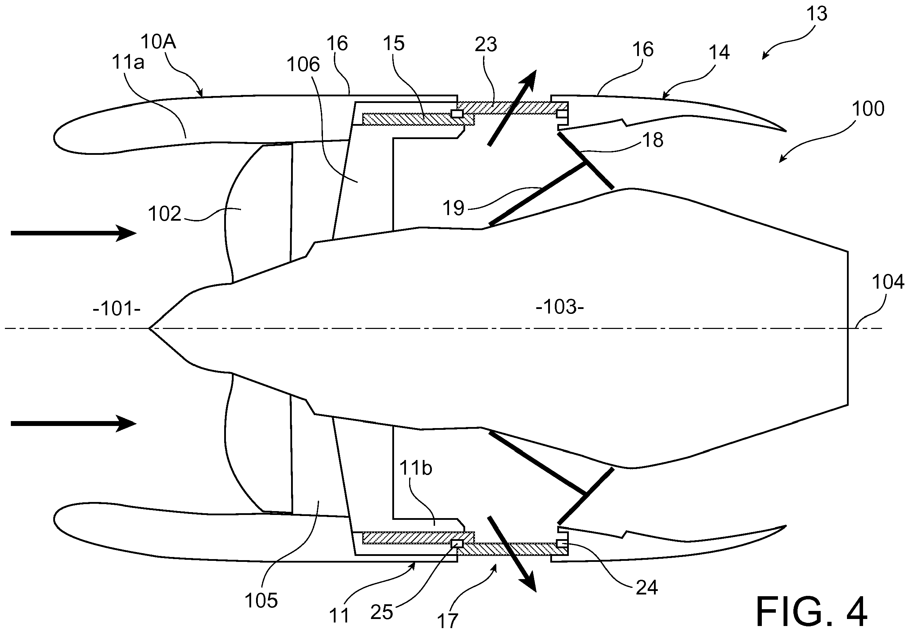

Lorsque le capot mobile 14 est en position ouverte et que les premières grilles 15 sont en position rentrée, l'inverseur de poussée 13 occupe un troisième état et fonctionne en annulation de poussée (figures 4, 13 et 14). Ce troisième état correspond à une configuration d'annulation de poussée, qui peut être totale ou partielle comme cela sera expliqué plus loin.

Lorsque l'inverseur de poussée 13 occupe le troisième état, le flux de gaz provenant de la veine secondaire 105 s'évacue vers l'extérieur via l'ouverture 17 définie entre l'enveloppe annulaire 11 et le capot mobile 14, sans être redirigé par les premières grilles 15 vers l'amont de la nacelle 10A, 10B, 10C. Ainsi, dans le troisième état, l'inverseur de poussée 13 prélève le flux de gaz circulant dans la veine secondaire 105 pour dissiper et donc annuler la poussée produite par ledit flux de gaz, et non pour produire une contre-poussée ou une poussée négative.

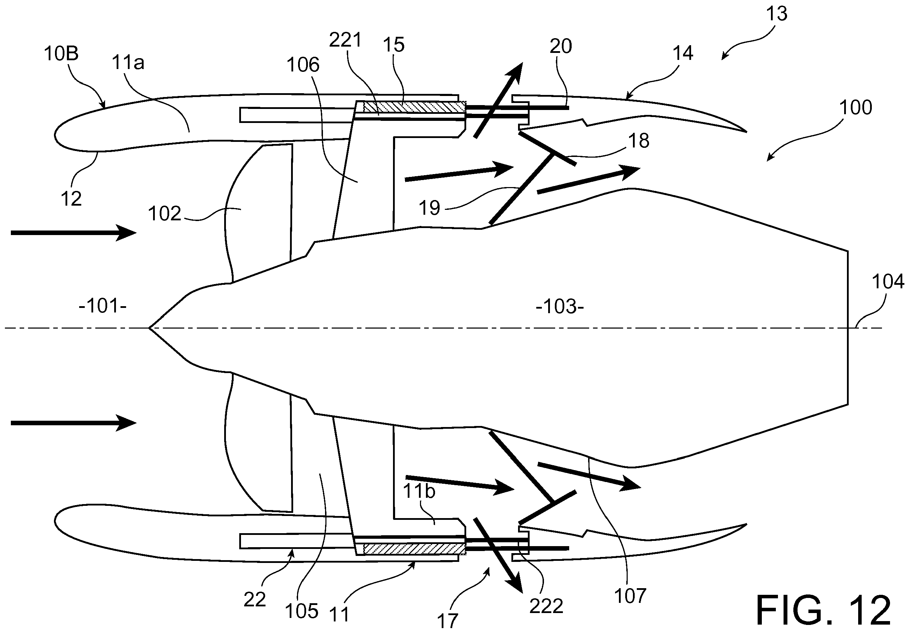

Dans des exemples ne faisant pas partie de l'invention revendiquée, dans le troisième état, l'ouverture 17 définie entre l'enveloppe annulaire 11 et le capot mobile 14 est par exemple laissée libre, de sorte que le flux de gaz provenant de la veine secondaire 105 traverse l'ouverture 17 pour ressortir à l'extérieur de la nacelle 10A, 10B, 10C avec une vitesse orientée de façon à générer une poussée sensiblement nulle suivant l'axe longitudinal 104 (figures 12, 13 et 14). Le flux de gaz provenant de la veine secondaire 105 s'évacue globalement radialement vers l'extérieur via l'ouverture 17 définie entre l'enveloppe annulaire 11et le capot mobile 14.

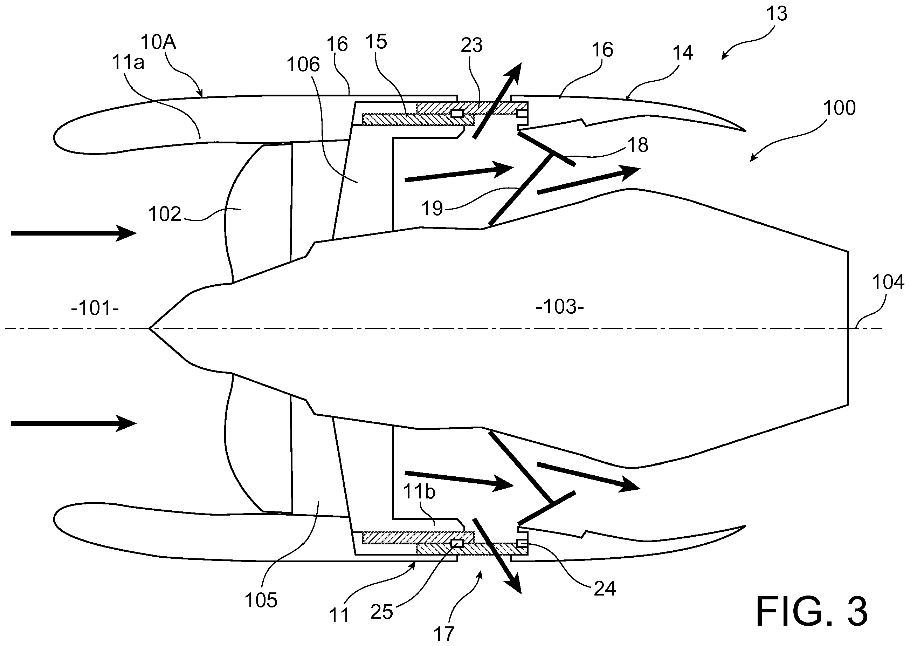

Selon l'invention, l'ouverture 17 est occupée par au moins une deuxième grille 23 mobile d'atténuation de poussée, comme cela sera expliqué plus en détail dans la suite de la description, de sorte que le flux de gaz provenant de la veine secondaire 105 traverse l'ouverture 17 pour ressortir à l'extérieur de la nacelle 10A, 10B, 10C avec une vitesse orientée de façon à générer, en variante, une poussée positive suivant l'axe longitudinal 104 (figures 3 et 4).

L'inverseur de poussée 13 n'agit donc que sur le flux de gaz circulant dans la veine secondaire 105.

En plus des premier, deuxième et troisième états, l'inverseur de poussée 13 peut bien sûr occuper tout état intermédiaire entre les premier et deuxième états comme tout état intermédiaire entre les premier et troisième états, de sorte à évacuer une plus petite partie du flux de gaz provenant de la veine secondaire 105 vers l'extérieur à travers l'ouverture 17, fermée ou non par les premières grilles 15, l'autre partie du flux de gaz s'échappant axialement de la veine secondaire 105 pour produire la poussée.

Cela permet par exemple d'obtenir un inverseur de poussée 13 fonctionnant en annulation partielle de poussée (figures 3 et 12), et non en annulation totale de poussée (figures 4, 13 et 14) qui correspond au troisième état de l'inverseur de poussée 13. Dans ces deux cas, il s'agit d'une configuration d'annulation de poussée, partielle ou totale, de l'inverseur de poussée 13. Il est ainsi possible de réguler la poussée produite par le flux de gaz s'échappant axialement de la veine secondaire 105. L'annulation partielle de poussée présente par exemple un intérêt pour dissiper une partie non nécessaire de la poussée produite par le flux de gaz s'échappant axialement de la veine secondaire 105, lors de manœuvres de l'aéronef.

L'inverseur de poussée 13 peut de cette manière fonctionner en annulation partielle ou totale de poussée dans des conditions qui ne sont pas autorisées pour le fonctionnement en inversion de poussée, afin de pallier les difficultés liées à la poussée importante produite par la turbomachine 100 qui est à double flux.

C'est par exemple le cas en phase d'atterrissage, lorsque l'aéronef se rapproche du sol et tourne au régime de ralenti, l'inverseur de poussée 13 des turbomachines 100 qui équipent l'aéronef pouvant fonctionner en annulation partielle de poussée afin d'accélérer la descente de l'aéronef. Il en est de même en phase de vol, dans des situations d'urgence où une descente rapide est requise.

C'est aussi le cas en phase d'atterrissage, lorsque l'aéronef a touché la piste d'atterrissage, au sol. L'inverseur de poussée 13 des turbomachines 100 qui équipent l'aéronef peut fonctionner en annulation partielle ou totale de poussée dès lors que la vitesse de l'aéronef est inférieure à une vitesse limite prédéfinie, par exemple de 60 nœuds (111.12 km/h), sans risque de ré-ingestion du flux d'air évacué ou d'ingestion de débris provenant de la piste d'atterrissage.

C'est encore le cas pour assurer l'arrêt au sol de l'aéronef ou encore en phase de roulage sur la piste d'atterrissage, l'inverseur de poussée 13 des turbomachines 100 qui équipent l'aéronef peut fonctionner en annulation partielle ou totale de poussée sans risque de ré-ingestion du flux d'air évacué ou d'ingestion de débris provenant de la piste d'atterrissage.

En phase de descente ou d'atterrissage, le fonctionnement de l'inverseur de poussée 13 des turbomachines 100 qui équipent l'aéronef en annulation partielle de poussée permet aussi d'éviter aux turbomachines 100 de fournir à l'aéronef une puissance dont il n'a pas besoin et qui devra de toute façon être dissipée lors du freinage de l'aéronef au sol.

Par ailleurs, l'inverseur de poussée 13 pouvant fonctionner en annulation partielle ou totale de poussée, le régime de ralenti de la turbomachine 100 peut être augmenté, ce qui permet d'une part d'augmenter la fiabilité de la turbomachine 100 et d'autre part d'atteindre plus facilement les exigences de puissance requises pour l'aéronef.

Le fonctionnement en annulation partielle ou totale de poussée de l'inverseur de poussée 13 d'une des turbomachines 100 qui équipent l'aéronef peut aussi permettre d'effectuer des manœuvres de l'aéronef en vol ou au sol, la poussée totale produite par chacune des turbomachines 100 n'étant plus égale. Cela permettrait en outre de réduire la taille de la dérive de l'aéronef.

Au contraire, en vol, lorsque la poussée totale produite par chacune des turbomachines n'est pas égale, le fonctionnement en annulation partielle ou totale de poussée de l'inverseur de poussée 13 d'une des turbomachines 100 qui équipent l'aéronef peut permettre de rééquilibrer la poussée totale produite par chacune des turbomachines 100.

Le fonctionnement de l'inverseur de poussée 13 en annulation partielle ou totale de poussée est en outre moins contraignant en termes de certifications que le fonctionnement en inversion de poussée.

L'inverseur de poussée 13 comprend aussi au moins une porte d'inverseur 18.

Les portes d'inverseur 18 sont conçues pour se déplacer depuis une position rétractée vers une position déployée, lorsque le capot mobile 14 coulisse depuis la position fermée vers la position ouverte.

Dans le premier état de l'inverseur de poussée 13, lorsque l'inverseur de poussée 13 fonctionne en jet direct, les portes d'inverseur 18 sont en position rétractée (figures 1, 8, 9 et 15). Dans les deuxième et troisième états de l'inverseur de poussée 13, lorsque l'inverseur de poussée 13 fonctionne en inversion ou en annulation de poussée, les portes d'inverseur 18 sont en position déployée (figures 2, 4, 10, 11, 13 et 14).

En position rétractée, les portes d'inverseur 18 libèrent axialement la veine secondaire 105. Les portes d'inverseur 18 sont par exemple logées dans le capot mobile 14. Le flux de gaz s'écoule ainsi d'amont en aval dans la veine secondaire 105 et s'échappe de cette dernière axialement.

En position déployée, les portes d'inverseur 18 sont agencées dans la veine secondaire 105 et obturent axialement la veine secondaire 108, notamment en aval du redresseur de flux 106. Les portes d'inverseurs 18 ferment ainsi la veine secondaire 105 et empêchent le flux de gaz circulant le long de la veine secondaire 105 de s'en échapper axialement. Les portes d'inverseur 18 favorisent donc l'évacuation du flux de gaz provenant de la veine secondaire 105 à travers l'ouverture 17 définie entre l'enveloppe annulaire 11 et le capot mobile 14 en position ouverte.

Les portes d'inverseur 18 sont par exemple entraînées en déplacement, entre la position rétractée et la position déployée, par le capot mobile 14, lorsqu'il coulisse entre la position fermée et la position ouverte.

Pour cela, les portes d'inverseur 18 peuvent chacune être montées pivotantes sur le capot mobile 14 autour d'un axe de pivotement (non représenté), orienté circonférentiellement, entre la position rétractée et la position déployée. Les portes d'inverseur 18 peuvent en outre être guidées en pivotement par des bielles 19 qui sont montées pivotantes, autour d'axes de pivotement (non représentés), orientés circonférentiellement, d'une part sur les portes d'inverseur 18, et d'autre part sur une virole interne 107 annulaire de la turbomachine 100, qui s'étend autour de l'axe longitudinal 104 et qui est entourée par la veine secondaire 105 et par la nacelle 10A, 10B, 10C.

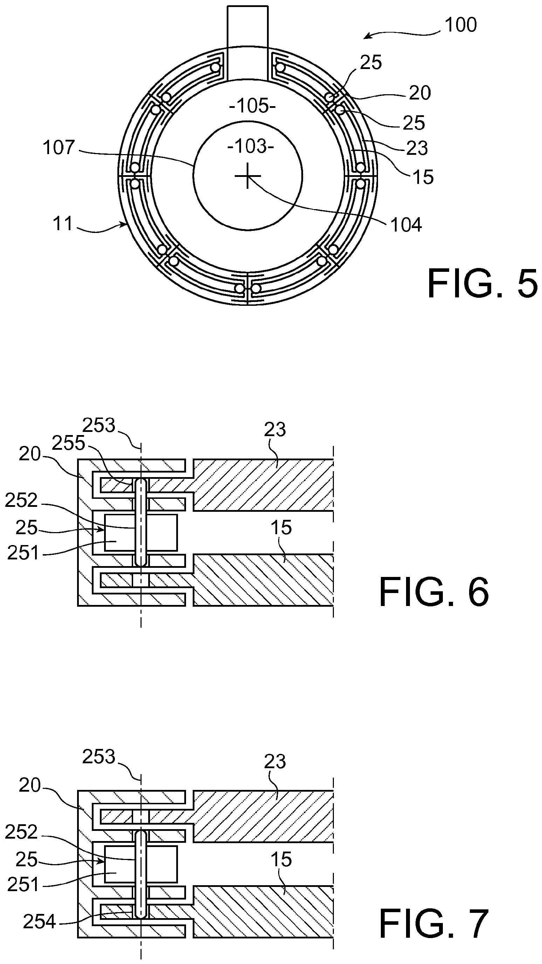

L'inverseur de poussée 13 peut aussi comprendre au moins un organe de guidage 20 porté par l'enveloppe annulaire 11 et conçu pour guider les premières grilles 15 en coulissement suivant l'axe longitudinal 104 entre les positions rentrée et sortie (figures 5, 6, 7, 10, 12 et 13).

Pour cela, les organes de guidage 20 sont par exemple chacun formés par un rail axial, orienté parallèlement à l'axe longitudinal 104. Les rails 20 sont en outre régulièrement répartis autour de l'axe longitudinal 104.

Chaque première grille 15 est par exemple guidée, à chacune de ses extrémités circonférentielles, par un rail 20.

En outre, chaque rail 20 est par exemple prévu pour guider les extrémités circonférentielles adjacentes de deux premières grilles 15, un rail 20 étant ainsi interposé entre deux premières grilles 15 circonférentiellement adjacentes.

L'inverseur de poussée 13 comprend encore un mécanisme d'actionnement conçu pour sélectivement :
- déplacer le capot mobile 14 et les premières grilles 15 en coulissement suivant l'axe longitudinal 104 d'une part respectivement depuis la position fermée vers la position ouverte et depuis la position rentrée vers la position sortie, et d'autre part depuis la position ouverte vers la position fermée et depuis la position sortie vers la position rentrée ;
- maintenir les premières grilles 15 en position rentrée et déplacer le capot mobile 14 en coulissement suivant l'axe longitudinal 104 entre la position fermée et la position ouverte.

Le mécanisme d'actionnement permet ainsi de faire fonctionner l'inverseur de poussée 13 sélectivement en inversion de poussée (figures 2, 10 et 11) ou en annulation de poussée (figures 3, 4, 12, 13 et 14), totale ou partielle.

Le mécanisme d'actionnement de l'inverseur de poussée 13 comprend par exemple au moins un premier actionneur 22 conçu pour entraîner en coulissement le capot mobile 14 suivant l'axe longitudinal 104 entre la position fermée et la position ouverte (figures 8 à 14 et 15).

Les premiers actionneurs 22 sont par exemple portés par l'enveloppe annulaire 11.

Les premiers actionneurs 22 comprennent par exemple des vérins s'étendant axialement et répartis régulièrement autour de l'axe longitudinal 104.

Les vérins des premiers actionneurs 22 peuvent être hydrauliques, pneumatiques ou encore électriques.

Selon un premier exemple ne faisant pas partie de l'invention revendiquée (non illustré), l'ouverture 17 définie entre l'enveloppe annulaire 11 et le capot mobile 14 est laissée libre dans le troisième état de l'inverseur de poussée 13 et le mécanisme d'actionnement comprend en outre au moins un premier organe de blocage conçu pour bloquer en coulissement les premières grilles 15 par rapport au capot mobile 14 suivant l'axe longitudinal 104, dans une première position de blocage, et pour libérer les premières grilles 15 en coulissement par rapport au capot mobile 14 suivant l'axe longitudinal 104, dans une deuxième position de blocage.

De cette manière, lorsque les premiers organes de blocage sont dans la première position de blocage, les premières grilles 15 sont solidaires en coulissement avec le capot mobile 14 suivant l'axe longitudinal 104. Ainsi, lorsque les premiers actionneurs 22 entraînent en coulissement le capot mobile 14 depuis la position fermée vers la position ouverte, le capot mobile 14 entraîne lui-même en coulissement les premières grilles 15 depuis la position rentrée vers la position sortie. Cela permet à l'inverseur de poussée 13 de passer du premier au deuxième état, et donc de fonctionner en inversion de poussée.

En revanche, lorsque les premiers organes de blocage sont dans la deuxième position de blocage, le capot mobile 14 et les premières grilles 15 sont libres de coulisser l'un par rapport à l'autre suivant l'axe longitudinal 104. Ainsi, lorsque les premiers actionneurs 22 entraînent en coulissement le capot mobile 14 depuis la position fermée vers la position ouverte, les premières grilles 15 peuvent rester en position rentrée. Cela permet à l'inverseur de poussée 13 de passer du premier au troisième état, et donc de fonctionner en annulation de poussée.

Une paire de premiers organes de blocage est par exemple prévue par première grille 15 pour bloquer, en première position de blocage, ladite première grille 15 par rapport au capot mobile 14 à chacune de ses deux extrémités circonférentielles.

Les premiers organes de blocage comprennent par exemple chacun un corps porté par le capot mobile 14 et un doigt monté coulissant par rapport au corps suivant un axe de coulissement, orienté radialement par rapport à l'axe longitudinal 104, entre la première position de blocage et la deuxième position de blocage.

Dans la première position de blocage, le doigt est engagé dans une ouverture qui est coaxiale avec l'axe de coulissement et qui est formée dans la première grille 15.

Dans la deuxième position de blocage, le doigt libère l'ouverture de la première grille 15.

Les premiers organes de blocage sont par exemple actionnés hydrauliquement, pneumatiquement, électriquement ou encore magnétiquement. Les premiers organes de blocage peuvent encore être actionnés mécaniquement par l'intermédiaire d'un câble ou encore d'un anneau relié à chacun des premiers organes de blocage.

Le mécanisme d'actionnement comprend par exemple aussi au moins un deuxième organe de blocage conçu pour libérer les premières grilles 15 en coulissement par rapport à l'enveloppe annulaire 11 suivant l'axe longitudinal 104, dans une troisième position de blocage, et pour bloquer les premières grilles 15 en coulissement par rapport à l'enveloppe annulaire 11 suivant l'axe longitudinal 104, les premières grilles 15 étant en position rentrée, dans une quatrième position de blocage.

De cette manière, lorsque les deuxièmes organes de blocage sont dans la troisième position de blocage, les premières grilles 15 sont libres de coulisser par rapport à l'enveloppe annulaire 11 suivant l'axe longitudinal 104. Ainsi, lorsque les premiers organes de blocage sont dans la première position de blocage et que les premiers actionneurs 22 entraînent en coulissement le capot mobile 14 depuis la position fermée vers la position ouverte, le capot mobile 14 entraîne lui-même en coulissement les premières grilles 15 depuis la position rentrée vers la position sortie. Cela permet à l'inverseur de poussée 13 de passer du premier au deuxième état, et donc de fonctionner en inversion de poussée.

En revanche, lorsque les deuxièmes organes de blocage sont dans la quatrième position de blocage, les premières grilles 15 sont fixes par rapport à l'enveloppe annulaire 11 et en position rentrée. Ainsi, lorsque les premiers organes de blocage sont dans la deuxième position de blocage et que les premiers actionneurs 22 entraînent en coulissement le capot mobile 14 entre la position fermée et la position ouverte, les premières grilles 15 sont maintenues en position rentrée. Cela permet à l'inverseur de poussée 13 de passer du premier au troisième état, et donc de fonctionner en annulation de poussée.

Une paire de deuxièmes organes de blocage est par exemple prévue par première grille 15 pour bloquer, en quatrième position de blocage, ladite première grille 15 par rapport à l'enveloppe annulaire 11 à chacune de ses deux extrémités circonférentielles.

Les deuxièmes organes de blocage comprennent par exemple chacun un corps porté par l'enveloppe annulaire 11, notamment par l'un des rails 20, et un doigt monté coulissant par rapport au corps suivant un axe de coulissement, orienté radialement par rapport à l'axe longitudinal 104, entre la troisième position de blocage et la quatrième position de blocage.

Dans la troisième position de blocage, le doigt libère une ouverture qui est coaxiale avec l'axe de coulissement et qui est formée dans la première grille 15 guidée par le rail 20, notamment dans son extrémité circonférentielle guidée par le rail 20.

Dans la quatrième position de blocage, le doigt est engagé dans l'ouverture de la première grille 15 qui est guidée par le rail 20, notamment dans son extrémité circonférentielle qui est guidée par le rail 20.

Les deuxièmes organes de blocage sont par exemple actionnés hydrauliquement, pneumatiquement, électriquement ou encore magnétiquement. Les deuxièmes organes de blocage peuvent encore être actionnés mécaniquement par l'intermédiaire d'un câble ou encore d'un anneau relié à chacun des deuxièmes organes de blocage.

Ainsi, selon le premier exemple, lorsque l'inverseur de poussée 13 fonctionne en inversion de poussée, les premiers actionneurs 22 entraînent en coulissement le capot mobile 14 depuis la position fermée vers la position ouverte, le capot mobile 14 entraînant lui-même d'une part les premières grilles 15 en coulissement depuis la position rentrée vers la position sortie, les premiers organes de blocage étant en première position de blocage, et d'autre part les portes d'inverseur 18 en pivotement depuis la position rétractée vers la position déployée. Lorsque le capot mobile 14 atteint la position ouverte, que les premières grilles 15 atteignent la position sortie et que les portes d'inverseur 18 atteignent la position déployée, l'inverseur de poussée 13 occupe le deuxième état et le flux de gaz circulant dans la veine secondaire 105 bloquée par les portes d'inverseur 18 s'évacue vers l'extérieur à travers les premières grilles 15 en position sortie qui dirigent ledit flux de gaz vers l'amont de la nacelle, produisant ainsi une contre-poussée orientée vers l'amont de la nacelle.

Lorsque l'inverseur de poussée 13 fonctionne en annulation de poussée, totale ou partielle, les premiers actionneurs 22 entraînent en coulissement le capot mobile 14 depuis la position fermée vers la position ouverte, le capot mobile 14 entraînant lui-même les portes d'inverseur 18 en pivotement depuis la position rétractée vers la position déployée, tandis que les premières grilles 15 sont maintenues en position rentrée par les deuxièmes organes de blocage en quatrième position de blocage. Lorsque le capot mobile 14 atteint la position ouverte et que les portes d'inverseur 18 atteignent la position déployée, les premières grilles 15 restant en position rentrée, l'inverseur de poussée 13 occupe le troisième état et le flux de gaz circulant dans la veine secondaire 105 bloquée par les portes d'inverseur 18 s'évacue vers l'extérieur globalement radialement à travers l'ouverture 17 définie entre l'enveloppe annulaire 11 et le capot mobile 14 en position ouverte, en ne produisant quasiment pas de poussée ni de contre-poussée. En d'autres termes, la poussée produite est sensiblement nulle.

Selon un premier mode de réalisation de l'invention illustré aux figures 1 à 7, l'inverseur de poussée 13 comprend en outre au moins une deuxième grille 23 d'atténuation de poussée, qui occupe l'ouverture 17 définie entre l'enveloppe annulaire 11 et le capot mobile 14 dans le troisième état de l'inverseur de poussée 13.

Par exemple, les deuxièmes grilles 23 sont régulièrement réparties autour de l'axe longitudinal 104. Chacune des deuxièmes grilles 23 occupe un secteur angulaire autour de l'axe longitudinal 104.

L'inverseur de poussée 13 comprend par exemple un même nombre de premières et de deuxièmes grilles 15, 23.

Les deuxièmes grilles 23 sont mobiles. Elles sont en outre conçues pour sélectivement :
- occuper une position rentrée, lorsque le capot mobile 14 est en position fermée ;
- occuper la position rentrée, lorsque le capot mobile 14 et les premières grilles 15 coulissent respectivement entre les positions fermée et ouverte et les positions rentrée et sortie ; et
- coulisser par rapport à l'enveloppe annulaire 11 suivant l'axe longitudinal 104 depuis la position rentrée vers une position sortie, lorsque les premières grilles 15 sont en position rentrée et que le capot mobile 14 coulisse depuis la position fermée vers la position ouverte, et depuis la position sortie vers la position rentrée, lorsque les premières grilles 15 sont en position rentrée et que le capot mobile 14 coulisse depuis la position ouverte vers la position fermée.

En position rentrée (figures 1 et 2), les deuxièmes grilles 23 sont logées dans l'enveloppe annulaire 11, qui les entoure, et sont radialement superposées par rapport à l'axe longitudinal 104 avec les premières grilles 15. Les deuxièmes grilles 23 ne sont ainsi traversées par aucun flux de gaz provenant de la veine secondaire 105.

Lorsque le capot mobile 14 est en position fermée, que les premières grilles 15 sont en position rentrée et que les deuxièmes grilles 23 sont en position rentrée, l'inverseur de poussée 13 occupe le premier état et fonctionne en jet direct (figure 1).

Lorsque le capot mobile 14 est en position ouverte, que les premières grilles 15 sont en position sortie et que les deuxièmes grilles 23 sont en position rentrée, l'inverseur de poussée 13 occupe le deuxième état et fonctionne en inversion de poussée (figure 2).

En position sortie (figures 4), les deuxièmes grilles 23 sont situées hors de l'enveloppe annulaire 11 et ferment l'ouverture 17 définie entre l'enveloppe annulaire 11 et le capot mobile 14 en position ouverte. Les deuxièmes grilles 23 s'étendent ainsi en travers de ladite ouverture 17.

Lorsque le capot mobile 14 est en position ouverte, que les premières grilles 15 sont en position rentrée et que les deuxièmes grilles 23 sont en position sortie, l'inverseur de poussée 13 occupe le troisième état et fonctionne en annulation de poussée (figure 4). Le flux de gaz provenant de la veine secondaire 105 s'évacue vers l'extérieur à travers les deuxièmes grilles 23 qui dirigent ledit flux de gaz vers l'aval de la nacelle 10A. Ainsi, le flux de gaz provenant de la veine secondaire 105 traverse l'ouverture 17 et ressort à l'extérieur de la nacelle 10B avec une vitesse orientée de façon à générer une poussée positive suivant l'axe longitudinal 104. Dans le troisième état, l'inverseur de poussée 13 prélève donc le flux de gaz circulant dans la veine secondaire 105 pour annuler la poussée produite par ledit flux de gaz, et non pour produire une contre-poussée. Il est entendu par « poussée positive », une force propulsive dirigée dans le sens d'avancement de l'aéronef.

Lorsque l'inverseur de poussée 13 occupe le troisième état, les deuxièmes grilles 23 sont ainsi conçues pour prélever le flux de gaz provenant de la veine secondaire 105 et pour renvoyer ledit flux de gaz vers l'extérieur et vers l'aval de la nacelle 10A.

Pour cela, les deuxièmes grilles 23 présentent des ailettes formant avec l'axe longitudinal 104 un deuxième angle compris entre 30 et 60°, notamment égal à 45°, une extrémité radialement interne des ailettes, par rapport à l'axe longitudinal 104, étant située vers l'amont, une extrémité radialement externe des ailettes, par rapport à l'axe longitudinal 104, étant située vers l'aval. Les ailettes sont ainsi inclinées, d'amont en aval suivant la direction axiale, depuis l'intérieur vers l'extérieur suivant la direction radiale.

Les deuxièmes grilles 23 sont par exemple agencées radialement à l'extérieur des premières grilles 15 par rapport à l'axe longitudinal 104. Lorsque l'inverseur de poussée occupe le premier état (figure 1), les deuxièmes grilles 23 sont par exemple radialement interposées, par rapport à l'axe longitudinal 104, entre l'enveloppe annulaire 11 et les premières grilles 15. Cela permet d'aider au décollement du flux de gaz qui s'évacue par les deuxièmes grilles 23 et donc de produire des perturbations dans le flux de gaz qui sont favorables à l'annulation de la poussée de la turbomachine 100.

Les organes de guidage 20 sont par exemple conçus pour guider d'une part les premières grilles 15 en coulissement suivant l'axe longitudinal 104 entre les positions rentrée et sortie, et d'autre part les deuxièmes grilles 23 en coulissement suivant l'axe longitudinal 104 entre les positions rentrées et sortie (figures 5, 6 et 7).

Pour cela, les organes de guidage 20 sont par exemple chacun formés par un rail axial, orienté parallèlement à l'axe longitudinal 104. Les rails 20 sont en outre régulièrement répartis autour de l'axe longitudinal 104.

Chaque paire de première et deuxième grilles 15, 23 superposées est par exemple guidée par un même rail 20.

En outre, chaque rail 20 est par exemple prévu pour guider d'une part les extrémités circonférentielles adjacentes de deux premières grilles 15 et d'autre part les extrémités circonférentielles adjacentes de deux deuxièmes grilles 23 superposées avec lesdites premières grilles 15, un rail 20 étant ainsi interposé entre chaque paire de première et deuxième grilles 15, 23 superposées circonférentiellement adjacente.

Selon le premier mode de réalisation, le mécanisme d'actionnement est conçu pour sélectivement :
- maintenir les deuxièmes grilles 23 en position rentrée et déplacer le capot mobile 14 et les premières grilles 15 en coulissement suivant l'axe longitudinal 104, d'une part respectivement depuis la position fermée vers la position ouverte et depuis la position rentrée vers la position sortie, et d'autre part respectivement depuis la position ouverte vers la position fermée et vers la position sortie vers la position rentrée ;
- maintenir les premières grilles 15 en position rentrée et déplacer le capot mobile 14 et les deuxièmes grilles 23 en coulissement suivant l'axe longitudinal 104 d'une part respectivement depuis la position fermée vers la position ouverte et depuis la position rentrée vers la position sortie, et d'autre part respectivement depuis la position ouverte vers la position fermée et vers la position sortie vers la position rentrée.

Le mécanisme d'actionnement permet ainsi de faire fonctionner l'inverseur de poussée 13 sélectivement en inversion de poussée (figure 2) ou en annulation de poussée (figure 4).

Le mécanisme d'actionnement comprend en outre au moins un premier organe de blocage 24 conçu pour :
- d'une part, bloquer en coulissement les premières grilles 15 par rapport au capot mobile 14 suivant l'axe longitudinal 104, dans une première position de blocage (figure 2), et libérer les premières grilles 15 en coulissement par rapport au capot mobile 14 suivant l'axe longitudinal 104, dans une deuxième position de blocage (figures 3 et 4), et
- d'autre part, libérer les deuxièmes grilles 23 en coulissement par rapport au capot mobile 14 suivant l'axe longitudinal 104, dans la première position de blocage (figure 2), et bloquer en coulissement les deuxièmes grilles 23 par rapport au capot mobile 14 suivant l'axe longitudinal 104, dans la deuxième position de blocage (figures 3 et 4).

De cette manière, lorsque les premiers organes de blocage 24 sont dans la première position de blocage (figure 2), les premières grilles 15 sont solidaires en coulissement avec le capot mobile 14 suivant l'axe longitudinal 104, tandis que le capot mobile 14 et les deuxièmes grilles 23 sont libres de coulisser l'un par rapport à l'autre suivant l'axe longitudinal 104. Ainsi, lorsque les premiers actionneurs 22 entraînent en coulissement le capot mobile 14 depuis la position fermée vers la position ouverte, le capot mobile 14 entraîne lui-même en coulissement les premières grilles 15 depuis la position rentrée vers la position sortie, les deuxièmes grilles 23 pouvant rester en position rentrée. Cela permet à l'inverseur de poussée 13 de passer du premier au deuxième état, et donc de fonctionner en inversion de poussée.

En revanche, lorsque les premiers organes de blocage 24 sont dans la deuxième position de blocage (figures 3 et 4), le capot mobile 14 et les premières grilles 15 sont libres de coulisser l'un par rapport à l'autre suivant l'axe longitudinal 104, tandis que les deuxièmes grilles 23 sont solidaires en coulissement avec le capot mobile 14 suivant l'axe longitudinal 104. Ainsi, lorsque les premiers actionneurs 22 entraînent en coulissement le capot mobile 14 depuis la position fermée vers la position ouverte, le capot mobile 14 entraîne lui-même en coulissement les deuxièmes grilles 23 depuis la position rentrée vers la position sortie, les premières grilles 15 pouvant rester en position rentrée. Cela permet à l'inverseur de poussée 13 de passer du premier au troisième état, et donc de fonctionner en annulation de poussée.

Une paire de premiers organes de blocage 24 est par exemple prévue par paire de première et deuxième grilles 15, 23 superposées pour bloquer d'une part ladite première grille 15 par rapport au capot mobile 14, en première position de blocage, et d'autre part ladite deuxième grille 23 par rapport au capot mobile 14, en deuxième position de blocage.

Les premiers organes de blocage 24 comprennent par exemple chacun un corps porté par le capot mobile 14 et un doigt monté coulissant par rapport au corps suivant un axe de coulissement, orienté radialement par rapport à l'axe longitudinal 104, entre la première position de blocage et la deuxième position de blocage.

Dans la première position de blocage, le doigt est engagé dans une ouverture qui est coaxiale avec l'axe de coulissement et qui est formée dans la première grille 15, et libère une ouverture qui est coaxiale avec l'axe de coulissement et qui est formée dans la deuxième grille 23.

Dans la deuxième position de blocage, le doigt est engagé dans l'ouverture de la deuxième grille 23, et libère l'ouverture de la première grille 15.

Les premiers organes de blocage 24 sont par exemple actionnés hydrauliquement, pneumatiquement, électriquement ou encore magnétiquement. Les premiers organes de blocage 24 peuvent encore être actionnés mécaniquement par l'intermédiaire d'un câble ou encore d'un anneau relié à chacun des premiers organes de blocage 24.

Le mécanisme d'actionnement comprend par exemple aussi au moins un deuxième organe de blocage 25 conçu pour :
- d'une part, libérer les premières grilles 15 en coulissement par rapport à l'enveloppe annulaire 11 suivant l'axe longitudinal 104, dans une troisième position de blocage (figures 2 et 6), et bloquer les premières grilles 15 en coulissement par rapport à l'enveloppe annulaire 11 suivant l'axe longitudinal 104, les premières grilles 15 étant en position rentrée, dans une quatrième position de blocage (figures 3, 4 et 7),
- d'autre part, bloquer les deuxièmes grilles 23 en coulissement par rapport à l'enveloppe annulaire 11 suivant l'axe longitudinal 104, les deuxièmes grilles 23 étant en position rentrée, dans la troisième position de blocage (figures 2 et 6), et libérer les deuxièmes grilles 23 en coulissement par rapport à l'enveloppe annulaire 11 suivant l'axe longitudinal 104, dans la quatrième position de blocage (figures 3, 4 et 7).

De cette manière, lorsque les deuxièmes organes de blocage 25 sont dans la troisième position de blocage (figures 2 et 6), les premières grilles 15 sont libres de coulisser par rapport à l'enveloppe annulaire 11 suivant l'axe longitudinal 104, tandis que les deuxièmes grilles 23 sont fixes par rapport à l'enveloppe annulaire 11 et en position rentrée. Ainsi, lorsque les premiers organes de blocage 24 sont dans la première position de blocage et que les premiers actionneurs 22 entraînent en coulissement le capot mobile 14 depuis la position fermée vers la position ouverte, le capot mobile 14 entraîne lui-même en coulissement les premières grilles 15 depuis la position rentrée vers la position sortie, les deuxièmes grilles 23 étant maintenues en position rentrée. Cela permet à l'inverseur de poussée 13 de passer du premier au deuxième état, et donc de fonctionner en inversion de poussée.

En revanche, lorsque les deuxièmes organes de blocage 25 sont dans la quatrième position de blocage (figures 3, 4 et 7), les premières grilles 15 sont fixes par rapport à l'enveloppe annulaire 11 et en position rentrée, tandis que les deuxièmes grilles 23 sont libres de coulisser par rapport à l'enveloppe annulaire 11 suivant l'axe longitudinal 104. Ainsi, lorsque les premiers organes de blocage 24 sont la deuxième position de blocage et que les premiers actionneurs 22 entraînent en coulissement le capot mobile 14 depuis la position fermée vers la position ouverte, le capot mobile 14 entraîne lui-même en coulissement les deuxièmes grilles 23 depuis la position rentrée vers la position sortie, les premières grilles 15 étant maintenues en position rentrée. Cela permet à l'inverseur de poussée 13 de passer du premier au troisième état, et donc de fonctionner en annulation de poussée.

Une paire de deuxièmes organes de blocage 25 est par exemple prévue par paire de première et deuxième grilles 15, 23 superposées pour bloquer d'une part ladite deuxième grille 23 par rapport à l'enveloppe annulaire 11 à chacune de ses deux extrémités circonférentielles, en troisième position de blocage, et d'autre part ladite première grille 15 par rapport à l'enveloppe annulaire 11 à chacune de ses deux extrémités circonférentielles, en quatrième position de blocage (figure 5).

Les deuxièmes organes de blocage 25 comprennent par exemple chacun un corps 251 porté par l'enveloppe annulaire 11, notamment par l'un des rails 20, et un doigt 252 monté coulissant par rapport au corps 251 suivant un axe de coulissement 253, orienté radialement par rapport à l'axe longitudinal 104, entre la troisième position de blocage et la quatrième position de blocage (figure 6 et 7).

Dans la troisième position de blocage (figure 6), le doigt 252 est engagé dans une ouverture 254 qui est coaxiale avec l'axe de coulissement 253 et qui est formée dans la deuxième grille 23 guidée par le rail 20, notamment dans son extrémité circonférentielle guidée par le rail 20. Le doigt 252 libère en outre une ouverture 255 qui est coaxiale avec l'axe de coulissement 253 et qui est formée dans la première grille 15 guidée par le rail 20, notamment dans son extrémité circonférentielle guidée par le rail 20.

Dans la quatrième position de blocage (figure 7), le doigt 252 est engagé dans l'ouverture 255 de la première grille 15 guidée par le rail 20. Le doigt 252 libère en outre l'ouverture 254 de la deuxième grille 23 guidée par le rail 20.

Les deuxièmes organes de blocage 25 sont par exemple actionnés hydrauliquement, pneumatiquement, électriquement ou encore magnétiquement. Les deuxièmes organes de blocage 25 peuvent encore être actionnés mécaniquement par l'intermédiaire d'un câble ou encore d'un anneau relié à chacun des deuxièmes organes de blocage 25.

Ainsi, selon le premier mode de réalisation, lorsque l'inverseur de poussée 13 fonctionne en inversion de poussée (figure 2), les premiers actionneurs 22 entraînent en coulissement le capot mobile 14 depuis la position fermée vers la position ouverte, le capot mobile 14 entraînant lui-même d'une part les premières grilles 15 en coulissement depuis la position rentrée vers la position sortie, les premiers organes de blocage 24 étant en première position de blocage, et d'autre part les portes d'inverseur 18 en pivotement depuis la position rétractée vers la position déployée, tandis que les deuxièmes grilles 23 sont maintenues en position rentrée par les deuxièmes organes de blocage 25 en troisième position de blocage. Lorsque le capot mobile 14 atteint la position ouverte, que les premières grilles 15 atteignent la position sortie et que les portes d'inverseur 18 atteignent la position déployée, les deuxièmes grilles 23 restant en position rentrée, l'inverseur de poussée 13 occupe le deuxième état et le flux de gaz circulant dans la veine secondaire 105 bloquée par les portes d'inverseur 18 s'évacue vers l'extérieur à travers les premières grilles 15 en position sortie qui dirigent ledit flux de gaz vers l'amont de la nacelle 10A, produisant ainsi une contre-poussée orientée vers l'amont de la nacelle 10A.

Lorsque l'inverseur de poussée 13 fonctionne en annulation de poussée (figure 4), les premiers actionneurs 22 entraînent en coulissement le capot mobile 14 depuis la position fermée vers la position ouverte, le capot mobile 14 entraînant lui-même d'une part les deuxièmes grilles 23 en coulissement depuis la position rentrée vers la position sortie, les premiers organes de blocage 24 étant en deuxième position de blocage, et d'autre part les portes d'inverseur 18 en pivotement depuis la position rétractée vers la position déployée, tandis que les premières grilles 15 sont maintenues en position rentrée par les deuxièmes organes de blocage en quatrième position de blocage. Lorsque le capot mobile 14 atteint la position ouverte, que les deuxièmes grilles 23 atteignent la position sortie et que les portes d'inverseur 18 atteignent la position déployée, les premières grilles 15 restant en position rentrée, l'inverseur de poussée 13 occupe le troisième état et le flux de gaz circulant dans la veine secondaire 105 bloquée par les portes d'inverseur 18 s'évacue vers l'extérieur à travers les deuxièmes grilles 23 en position sortie qui oriente ledit flux de gaz vers l'aval de la nacelle 10A, produisant une poussée positive.

Selon un exemple ne faisant pas partie de l'invention revendiquée, illustré aux figures 8 à 14, l'ouverture 17 définie entre l'enveloppe annulaire 11 et le capot mobile 14 est laissée libre dans le troisième état de l'inverseur de poussée 13 et les premiers actionneurs 22 sont conçus pour sélectivement :
- entraîner le capot mobile 14 et les premières grilles 15 ensemble en coulissement suivant l'axe longitudinal 104 d'une part respectivement depuis la position fermée vers la position ouverte et depuis la position rentrée vers la position sortie, et d'autre part depuis la position ouverte vers la position fermée et depuis la position sortie vers la position rentrée ;
- maintenir les premières grilles 15 en position rentrée et entraîner le capot mobile 14 en coulissement suivant l'axe longitudinal 104 entre la position fermée et la position ouverte.

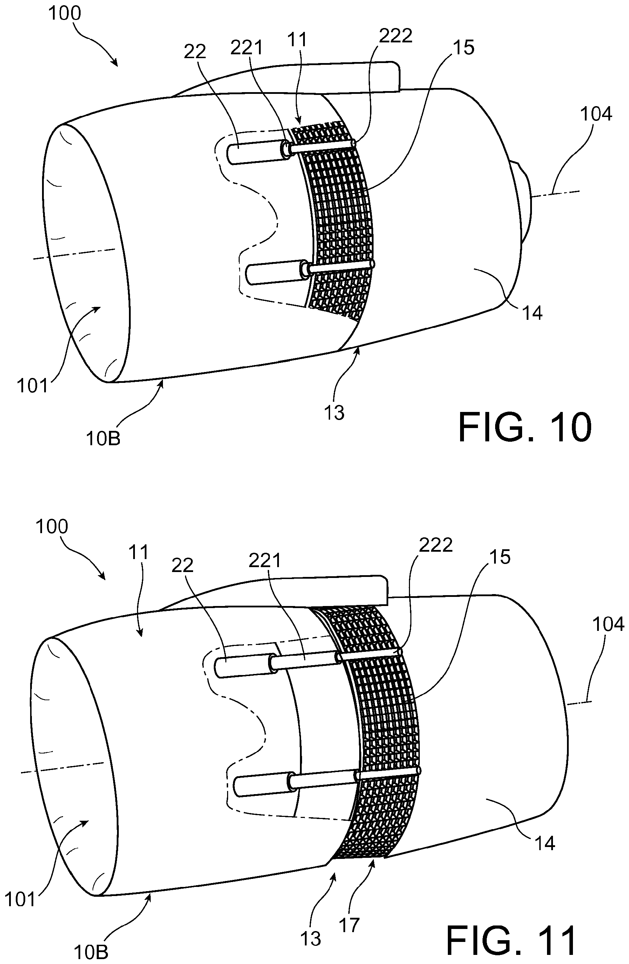

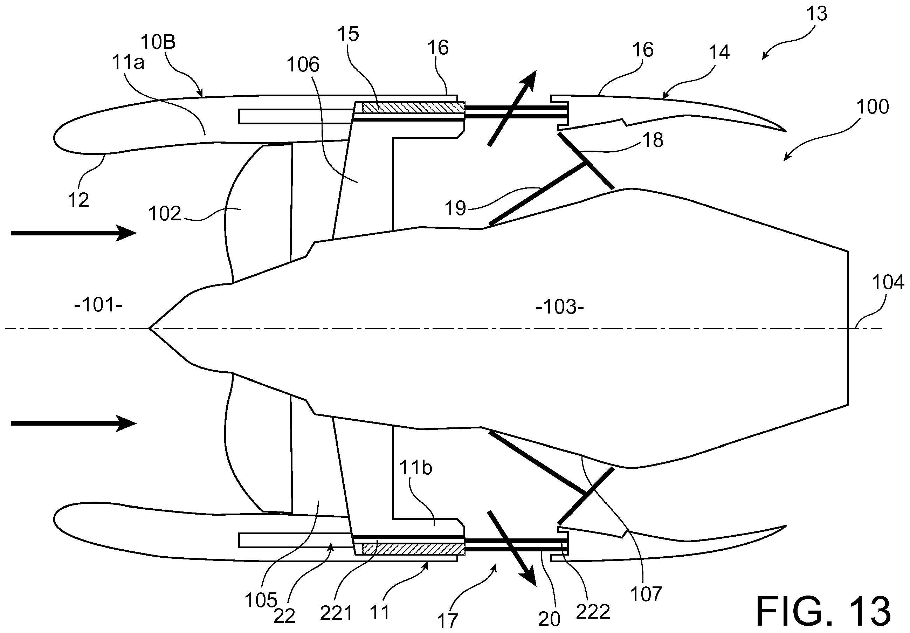

De cette manière, les premiers actionneurs 22 permettent à la fois de faire fonctionner l'inverseur de poussée 13 en inversion de poussée (figure 10 et 11), en entraînant le capot mobile 14 et les premières grilles 15 en coulissement ensemble, et de faire fonctionner l'inverseur de poussée en annulation de poussée (figures 13 et 14), en n'entraînant que le capot mobile 14 en coulissement, les premières grilles 15 restant en position rentrée.

Pour cela, les premiers actionneurs 22 comprennent par exemple des vérins s'étendant axialement et répartis régulièrement autour de l'axe longitudinal 104.

Chaque première grille 15 est par exemple entraînée en coulissement par un seul vérin des premiers actionneurs 22.

Les vérins des premiers actionneurs 22 comprennent par exemple deux tiges coaxiales, une tige extérieure 221 et une tige intérieure 222, coulissantes l'une par rapport à l'autre. Une course de la tige extérieure 221 est en outre inférieure à celle de la tige intérieure 222. La tige extérieure 221 est montée solidaire en coulissement axial avec l'une des premières grilles 15, tandis que la tige intérieure 222 est montée solidaire en coulissement axial avec le capot mobile 14.

Les vérins des premiers actionneurs 22 peuvent être hydrauliques, pneumatiques ou encore électriques.

Ainsi, selon cet exemple, lorsque l'inverseur de poussée 13 fonctionne en inversion de poussée (figure 10 et 11), les premiers actionneurs 22 entraînent en coulissement d'une part le capot mobile 14 depuis la position fermée vers la position ouverte, le capot mobile 14 entraînant lui-même les portes d'inverseur 18 en pivotement depuis la position rétractée vers la position déployée, et d'autre part les premières grilles 15 depuis la position rentrée vers la position sortie. Lorsque le capot mobile 14 atteint la position ouverte, que les premières grilles 15 atteignent la position sortie et que les portes d'inverseur 18 atteignent la position déployée, l'inverseur de poussée 13 occupe le deuxième état et le flux de gaz circulant dans la veine secondaire 105 bloquée par les portes d'inverseur 18 s'évacue vers l'extérieur à travers les premières grilles 15 en position sortie qui dirigent ledit flux de gaz vers l'amont de la nacelle 10B, produisant ainsi une contre-poussée orientée vers l'amont de la nacelle 10B.

Lorsque l'inverseur de poussée 13 fonctionne en annulation de poussée (figures 13 et 14), les premiers actionneurs 22 entraînent en coulissement le capot mobile 14 depuis la position fermée vers la position ouverte, le capot mobile 14 entraînant lui-même les portes d'inverseur 18 en pivotement depuis la position rétractée vers la position déployée, tandis qu'ils maintiennent les premières grilles 15 en position rentrée. Lorsque le capot mobile 14 atteint la position ouverte et que les portes d'inverseur 18 atteignent la position déployée, les premières grilles 15 restant en position rentrée, l'inverseur de poussée 13 occupe le troisième état et le flux de gaz circulant dans la veine secondaire 105 bloquée par les portes d'inverseur 18 s'évacue vers l'extérieur à travers l'ouverture 17 définie entre l'enveloppe annulaire 11 et le capot mobile 14 en position ouverte, en ne produisant quasiment pas de poussée ni de contre-poussée. En d'autres termes, la poussée produite est sensiblement nulle.

Selon un autre exemple ne faisant pas partie de l'invention revendiquée, illustré à la figure 15, l'ouverture 17 définie entre l'enveloppe annulaire 11 et le capot mobile 14 est laissée libre dans le troisième état de l'inverseur de poussée 13 et le mécanisme d'actionnement comprend au moins un deuxième actionneur 26 conçus pour sélectivement :
- entraîner les premières grilles 15 en coulissement suivant l'axe longitudinal 104 depuis la position rentrée vers la position sortie, lorsque les premiers actionneurs 22 entraînent le capot mobile 14 en coulissement suivant l'axe longitudinal 104 depuis la position fermée vers la position ouverte, et depuis la position sortie vers la position rentrée, lorsque les premiers actionneurs 22 entraînent le capot mobile 14 en coulissement suivant l'axe longitudinal 104 depuis la position ouverte vers la position fermée ;
- maintenir les premières grilles 15 en position rentrée, lorsque les premiers actionneurs 22 entraînent le capot mobile 14 en coulissement suivant l'axe longitudinal 104 entre la position fermée et la position ouverte.

De cette manière, le capot mobile 14 et les premières grilles 15 sont entraînés en coulissement indépendamment l'un de l'autre. Lorsque l'inverseur de poussée 13 fonctionne en inversion de poussée, les premiers et deuxièmes actionneurs 22, 26 entraînent parallèlement en coulissement le capot mobile 14 et les premières grilles 15. Au contraire, lorsque l'inverseur de poussée 13 fonctionne en annulation de poussée, les premières grilles 15 sont maintenues en position rentrée et seul le capot mobile 14 est entraîné en coulissement par les premiers actionneurs 22.

Les deuxièmes actionneurs 26 sont par exemple portés par l'enveloppe annulaire 11.

Les deuxièmes actionneurs 26 comprennent par exemple des vérins s'étendant axialement et répartis régulièrement autour de l'axe longitudinal 104.

Chaque première grille 15 est par exemple entraînée en coulissement par un seul vérin des deuxièmes actionneurs 26.

Les vérins des deuxièmes actionneurs 26 peuvent être hydrauliques, pneumatiques ou encore électriques.

Ainsi, selon cet autre exemple, lorsque l'inverseur de poussée 13 fonctionne en inversion de poussée, les premiers actionneurs 22 entraînent en coulissement le capot mobile 14 depuis la position fermée vers la position ouverte, le capot mobile 14 entraînant lui-même les portes d'inverseur 18 en pivotement depuis la position rétractée vers la position déployée, tandis que les deuxièmes actionneurs 26 entraînent en coulissement les premières grilles 15 depuis la position rentrée vers la position sortie. Lorsque le capot mobile 14 atteint la position ouverte, que les premières grilles 15 atteignent la position sortie et que les portes d'inverseur 18 atteignent la position déployée, l'inverseur de poussée 13 occupe le deuxième état et le flux de gaz circulant dans la veine secondaire 105 bloquée par les portes d'inverseur 18 s'évacue vers l'extérieur à travers les premières grilles 15 en position sortie qui dirigent ledit flux de gaz vers l'amont de la nacelle 10C, produisant ainsi une contre-poussée orientée vers l'amont de la nacelle 10C.

Lorsque l'inverseur de poussée 13 fonctionne en annulation de poussée, les premiers actionneurs 22 entraînent en coulissement le capot mobile 14 depuis la position fermée vers la position ouverte, le capot mobile 14 entraînant lui-même les portes d'inverseur 18 en pivotement depuis la position rétractée vers la position déployée, tandis que les premières grilles 15 sont maintenues en position rentrée. Lorsque le capot mobile 14 atteint la position ouverte et que les portes d'inverseur 18 atteignent la position déployée, les premières grilles 15 restant en position rentrée, l'inverseur de poussée 13 occupe le troisième état et le flux de gaz circulant dans la veine secondaire 105 bloquée par les portes d'inverseur 18 s'évacue vers l'extérieur à travers l'ouverture 17 définie entre l'enveloppe annulaire 11et le capot mobile 14 en position ouverte, en ne produisant quasiment pas de poussée ni de contre-poussée. En d'autres termes, la poussée produite est sensiblement nulle.

## Revendications

1. Nacelle (10A), destinée à une turbomachine à double flux (100) d'aéronef dans laquelle un flux d'air entrant (101) s'écoule d'amont en aval en se séparant en un canal d'écoulement de flux primaire et un canal d'écoulement de flux secondaire (105), la nacelle (10A, 10B, 10C) comprenant :
- une enveloppe annulaire (11) fixe s'étendant autour d'un axe longitudinal (104) de la nacelle,
- un inverseur de poussée (13) comprenant :
∘ un capot mobile (14) annulaire s'étendant autour de l'axe longitudinal (104) et situé en aval de l'enveloppe annulaire (11), le capot mobile (14) étant apte à coulisser par rapport à l'enveloppe annulaire (11) suivant l'axe longitudinal (104) entre une position fermée, dans laquelle le capot mobile (14) et l'enveloppe annulaire (11) définissent ensemble une surface extérieure (16) annulaire et continue de la nacelle (10A, 10B, 10C), et une position ouverte dans laquelle le capot mobile (14) et l'enveloppe annulaire (11) définissent entre eux une ouverture (17) orientée radialement par rapport à l'axe longitudinal (104), ladite ouverture (17) s'étendant circonférentiellement autour de l'axe longitudinal (104),
∘ au moins une première grille (15) mobile d'inversion de poussée, apte à occuper une position rentrée dans laquelle, le capot mobile (14) étant en position fermée, la première grille est logée dans l'enveloppe annulaire (11), et une position sortie dans laquelle, le capot mobile (14) étant en position ouverte, la première grille s'étend en travers de l'ouverture (17), de telle façon qu'au moins une partie du flux secondaire est apte à traverser la première grille en position sortie pour ressortir à l'extérieur de la nacelle (10A) avec une vitesse orientée de façon à générer suivant l'axe longitudinal (104) une poussée négative,
le capot mobile (14) et la ou chaque première grille (15) étant reliés à un mécanisme d'actionnement apte à les déplacer conjointement,
la nacelle (10A) étant **caractérisée en ce que** ledit mécanisme d'actionnement est conçu pour permettre une configuration d'annulation de poussée, partielle ou totale, de l'inverseur de poussée (13) dans laquelle le capot mobile (14) est déplacé dans sa position ouverte tout en maintenant la ou chaque première grille (15) dans sa position rentrée, et **en ce que** dans ladite configuration d'annulation de poussée, l'ouverture (17) est occupée par au moins une deuxième grille (23) d'atténuation de poussée de l'inverseur de poussée (13), de façon à ce que le flux secondaire traversant l'ouverture (17) ressorte à l'extérieur de la nacelle avec une vitesse orientée de façon à générer suivant l'axe longitudinal (104) une poussée sensiblement nulle ou positive.

2. Nacelle (10A) selon la revendication 1, dans laquelle le mécanisme d'actionnement est conçu pour sélectivement :
- déplacer le capot mobile (14) et la ou les premières grilles (15) en coulissement suivant l'axe longitudinal (104) respectivement depuis la position fermée vers la position ouverte et depuis la position rentrée vers la position sortie ;
- maintenir la ou les premières grilles (15) en position rentrée et déplacer le capot mobile (14) en coulissement suivant l'axe longitudinal (104) entre la position fermée et la position ouverte.

3. Nacelle (10A) selon la revendication 2, dans laquelle le mécanisme d'actionnement comprend au moins un premier actionneur (22) conçu pour entraîner en coulissement le capot mobile (14) suivant l'axe longitudinal (104) entre la position fermée et la position ouverte.

4. Nacelle (10A) selon la revendication 3, dans laquelle le mécanisme d'actionnement comprend au moins un premier organe de blocage (24) conçu pour bloquer en coulissement la ou les premières grilles (15) par rapport au capot mobile (14) suivant l'axe longitudinal (104), dans une première position de blocage, et pour libérer la ou les premières grilles (15) en coulissement par rapport au capot mobile (14) suivant l'axe longitudinal (104), dans une deuxième position de blocage.

5. Nacelle (10A) selon la revendication 3 ou la revendication 4, dans laquelle le mécanisme d'actionnement comprend au moins un deuxième organe de blocage (25) conçu pour libérer la ou les premières grilles (15) en coulissement par rapport à l'enveloppe annulaire (11) suivant l'axe longitudinal (104), dans une troisième position de blocage, et pour bloquer la ou les premières grilles (15) en coulissement par rapport à l'enveloppe annulaire (11) suivant l'axe longitudinal (104), la ou les premières grilles (15) étant en position rentrée, dans une quatrième position de blocage.

6. Nacelle (10A) selon l'une des revendications 1 à 5, dans laquelle la ou chaque deuxième grille (23) d'atténuation de poussée est conçue pour sélectivement :
- occuper une position rentrée dans laquelle elle est logée dans l'enveloppe annulaire (11) de la nacelle, ladite deuxième grille (23) en position rentrée étant radialement superposée par rapport à l'axe longitudinal (104) avec une première grille (15) lorsque le capot mobile (14) est en position fermée ;
- rester dans la position rentrée lorsque le capot mobile (14) et la première grille (15) coulissent respectivement depuis la position fermée vers la position ouverte et depuis la position rentrée vers la position sortie ;
- coulisser par rapport à l'enveloppe annulaire (11) de la nacelle suivant l'axe longitudinal (104) depuis la position rentrée vers une position sortie dans laquelle la deuxième grille (23) occupe l'ouverture (17) définie entre le capot mobile (14) et l'enveloppe annulaire (11), lorsque la première grille (15) est en position rentrée et que le capot mobile (14) coulisse depuis la position fermée vers la position ouverte.

7. Nacelle (10A) selon la revendication 6, dans laquelle la ou les deuxièmes grilles (23) sont agencées radialement à l'extérieur de la ou des premières grilles (15) par rapport à l'axe longitudinal (104).

8. Nacelle (10A) selon la revendication 6 ou la revendication 7, dans laquelle le mécanisme d'actionnement est conçu pour sélectivement :
- maintenir la ou les deuxièmes grilles (23) en position rentrée et déplacer le capot mobile (14) et la ou les premières grilles (15) en coulissement suivant l'axe longitudinal (104) respectivement depuis la position fermée vers la position ouverte et depuis la position rentrée vers la position sortie ;
- maintenir la ou les premières grilles (15) en position rentrée et déplacer le capot mobile (14) et la ou les deuxièmes grilles (23) en coulissement suivant l'axe longitudinal (104) respectivement depuis la position fermée vers la position ouverte et depuis la position rentrée vers la position sortie.

9. Nacelle (10A) selon l'une des revendications 6 à 8, dans laquelle le mécanisme d'actionnement comprend au moins un premier organe de blocage (24) conçu pour :
- d'une part, bloquer en coulissement la ou les premières grilles (15) par rapport au capot mobile (14) suivant l'axe longitudinal (104), dans une première position de blocage, et libérer la ou les premières grilles (15) en coulissement par rapport au capot mobile (14) suivant l'axe longitudinal (104), dans une deuxième position de blocage, et
- d'autre part, libérer la ou les deuxièmes grilles (23) en coulissement par rapport au capot mobile (14) suivant l'axe longitudinal (104), dans la première position de blocage, et bloquer en coulissement la ou les deuxièmes grilles (23) par rapport au capot mobile (14) suivant l'axe longitudinal (104), dans la deuxième position de blocage.

10. Nacelle (10A) selon l'une des revendications 6 à 9, dans laquelle le mécanisme d'actionnement comprend au moins un deuxième organe de blocage (25) conçu pour :
- d'une part, libérer la ou les premières grilles (15) en coulissement par rapport à l'enveloppe annulaire (11) suivant l'axe longitudinal (104), dans une troisième position de blocage, et bloquer la ou les premières grilles (15) en coulissement par rapport à l'enveloppe annulaire (11) suivant l'axe longitudinal (104), la ou les premières grilles (15) étant en position rentrée, dans une quatrième position de blocage,
- d'autre part, bloquer la ou les deuxièmes grilles (23) en coulissement par rapport à l'enveloppe annulaire (11) suivant l'axe longitudinal (104), la ou les deuxièmes grilles (23) étant en position rentrée, dans la troisième position de blocage, et libérer la ou les deuxièmes grilles (23) en coulissement par rapport à l'enveloppe annulaire (11) suivant l'axe longitudinal (104), dans la quatrième position de blocage.

11. Turbomachine à double flux (100) d'aéronef comprenant, d'amont en aval suivant une direction axiale d'écoulement d'un gaz, une soufflante (102) et un bec de séparation duquel sont issus un canal d'écoulement de flux primaire annulaire, dit veine primaire, et un canal d'écoulement de flux secondaire (105) annulaire, dit veine secondaire, entourant la veine primaire, la turbomachine (100) étant en outre carénée par une nacelle (10A, 10B, 10C) selon l'une des revendications 1 à 10.

12. Aéronef comprenant au moins une turbomachine à double flux selon la revendication 11.

## Patentansprüche

1. Gondel (10A) für eine Bypass-Turbomaschine (100) eines Flugzeugs, wobei ein eintretender Luftstrom (101) von stromaufwärts nach stromabwärts strömt, indem er sich in einen Strömungskanal für den primären Strom und einen Strömungskanal für den sekundären Strom (105) trennt, wobei die Gondel (10A, 10B, 10C) Folgendes aufweist:
- eine feststehende ringförmige Umhüllung (11), die sich um eine Längsachse (104) der Gondel erstreckt,
- eine Schubumkehrvorrichtung (13) mit:
∘ einer ringförmigen beweglichen Abdeckung (14), die um die Längsachse (104) verläuft und stromabwärts der ringförmigen Umhüllung (11) liegt, wobei sich die bewegliche Abdeckung (14) bezüglich der ringförmigen Umhüllung (11) entlang der Längsachse (104) zwischen einer geschlossenen Stellung, in der die bewegliche Abdeckung (14) und die ringförmige Umhüllung (11) zusammen eine ringförmige und durchgehende Außenfläche (16) der Gondel (10A, 10B, 10C) definieren, und einer geöffneten Stellung verschieben kann, in der die bewegliche Abdeckung (14) und die ringförmige Umhüllung (11) zwischen sich eine Öffnung (17) definieren, die radial bezüglich der Längsachse (104) ausgerichtet ist, wobei die Öffnung (17) in Umfangsrichtung um die Längsachse (104) herum verläuft,
∘ mindestens ein erstes bewegliches Gitter (15) der Schubumkehrvorrichtung, das eine zurückgezogene Stellung einnehmen kann, in der sich, wenn die mobile Abdeckung (14) in der geschlossenen Stellung ist, das erste Gitter in der ringförmigen Umhüllung (11) befindet, und eine ausgefahrene Stellung einnehmen kann, in der sich, wenn die bewegliche Abdeckung (14) in der geöffneten Stellung ist, das erste Gitter derart durch die Öffnung (17) hindurch erstreckt, dass mindestens ein Teil des sekundären Stroms das erste Gitter in der ausgefahrenen Stellung durchqueren kann, um wieder an der Außenseite der Gondel (10A) mit einer Geschwindigkeit auszutreten, die derart ausgerichtet ist, dass sie entlang der Längsachse (104) einen negativen Schub erzeugt,
wobei die bewegliche Abdeckung (14) und das oder jedes Gitter (15) mit einem Betätigungsmechanismus verbunden sind, der diese gemeinsam verschieben kann,
wobei die Gondel (10A) **dadurch gekennzeichnet ist, dass** der Betätigungsmechanismus so ausgeführt ist, dass er eine Konfiguration einer, teilweisen oder vollständigen, Schubaufhebung der Schubumkehrvorrichtung (13) ermöglicht, wobei die bewegliche Abdeckung (14) in ihrer geöffneten Stellung verschoben wird und gleichzeitig das oder jedes erste Gitter (15) in seiner zurückgezogenen Stellung gehalten wird, und dass bei der Konfiguration der Schubaufhebung die Öffnung (17) von mindestens einem zweiten Gitter (23) zur Schubminderung der Schubumkehrvorrichtung (13) derart belegt ist, dass der die Öffnung (17) durchquerende sekundäre Strom wieder an der Außenseite der Gondel mit einer Geschwindigkeit austritt, die derart ausgerichtet ist, dass sie entlang der Längsachse (104) im Wesentlichen keinen oder einen positiven Schub erzeugt.

2. Gondel (10A) nach Anspruch 1, wobei der Betätigungsmechanismus dazu vorgesehen ist, wahlweise:
- die bewegliche Abdeckung (14) und das oder die ersten Gitter (15) gleitend entlang der Längsachse (104) jeweils aus der geschlossenen Stellung in die geöffnete Stellung sowie aus der zurückgezogenen Stellung in die ausgefahrene Stellung zu verschieben;
- das oder die ersten Gitter (15) in der zurückgezogenen Stellung zu halten und die bewegliche Abdeckung (14) gleitend entlang der Längsachse (104) zwischen der geschlossenen Stellung und der geöffneten Stellung zu verschieben.

3. Gondel (10A) nach Anspruch 2, wobei der Betätigungsmechanismus mindestens ein erstes Betätigungsglied (22) zum gleitenden Mitnehmen der beweglichen Abdeckung (14) entlang der Längsachse (104) zwischen der geschlossenen Stellung und der geöffneten Stellung aufweist.

4. Gondel (10A) nach Anspruch 3, wobei der Betätigungsmechanismus mindestens ein erstes Sperrglied (24) zum gleitenden Sperren des oder der ersten Gitter (15) bezüglich der beweglichen Abdeckung (14) entlang der Längsachse (104) in einer ersten Sperrposition, und zum Freigeben des oder der ersten Gitter (15) gleitend bezüglich der beweglichen Abdeckung (14) entlang der Längsachse (104) in einer zweiten Sperrstellung aufweist.

5. Gondel (10A) nach Anspruch 3 oder Anspruch 4, wobei der Betätigungsmechanismus mindestens ein zweites Sperrglied (25) zum Freigeben des oder der ersten Gitter (15) gleitend bezüglich der ringförmigen Umhüllung (11) entlang der Längsachse (104) in einer dritten Sperrposition sowie zum Sperren des oder der ersten Gitter (15) gleitend bezüglich der ringförmigen Umhüllung (11) entlang der Längsachse (104) aufweist, wobei sich das oder die ersten Gitter (15) in der zurückgezogenen Stellung in einer vierten Sperrposition befinden.

6. Gondel (10A) nach einem der Ansprüche 1 bis 5, wobei das oder jedes zweite Gitter (23) zur Schubminderung dazu ausgeführt ist, wahlweise:
- eine zurückgezogene Stellung einzunehmen, in der es sich in der ringförmigen Umhüllung (11) der Gondel befindet, wobei das zweite Gitter (23) in der zurückgezogenen Stellung bezüglich der Längsachse (104) durch ein erstes Gitter (15) radial überlagert wird, wenn sich die bewegliche Abdeckung (14) in der geschlossenen Stellung befindet;
- in der zurückgezogenen Stellung zu verbleiben, wenn die bewegliche Abdeckung (14) und das erste Gitter (15) jeweils aus der geschlossenen Stellung in die geöffnete Stellung und aus der zurückgezogenen Stellung in die ausgefahrene Stellung gleiten;
- bezüglich der ringförmigen Umhüllung (11) der Gondel entlang der Längsachse (104) aus der zurückgezogenen Stellung in eine ausgefahrene Stellung zu gleiten, in der das zweite Gitter (23) die zwischen der beweglichen Abdeckung (14) und der ringförmigen Umhüllung (11) definierte Öffnung (17) einnimmt, wenn sich das erste Gitter (15) in der zurückgezogenen Stellung befindet und die bewegliche Abdeckung (14) aus der geschlossenen Stellung in die geöffnete Stellung gleitet.

7. Gondel (10A) nach Anspruch 6, wobei das oder die zweiten Gitter (23) radial an der Außenseite des oder der ersten Gitter (15) bezüglich der Längsachse (104) angeordnet sind.

8. Gondel (10A) nach Anspruch 6 oder Anspruch 7, wobei der Betätigungsmechanismus dazu ausgeführt ist, wahlweise:
- das oder die zweiten Gitter (23) in der zurückgezogenen Stellung zu halten und die bewegliche Abdeckung (14) und das oder die ersten Gitter (15) gleitend entlang der Längsachse (104) jeweils aus der geschlossenen Stellung in die geöffnete Stellung und aus der zurückgezogenen Stellung in die ausgefahrene Stellung zu verschieben,
- das oder die ersten Gitter (15) in der zurückgezogenen Stellung zu halten und die bewegliche Abdeckung (14) und das oder die zweiten Gitter (23) gleitend entlang der Längsachse (104) jeweils aus der geschlossenen Stellung in die geöffnete Stellung und aus der zurückgezogenen Stellung in die ausgefahrene Stellung zu verschieben.

9. Gondel (10A) nach einem der Ansprüche 6 bis 8, wobei der Betätigungsmechanismus mindestens ein erstes Sperrglied (24) aufweist, das dazu ausgeführt ist:
- einerseits gleitend das oder die ersten Gitter (15) bezüglich der beweglichen Abdeckung (14) entlang der Längsachse (104) in einer ersten Sperrposition zu sperren, und das oder die ersten Gitter (15) gleitend bezüglich der beweglichen Abdeckung (14) entlang der Längsachse (104) in einer zweiten Sperrposition freizugeben, und
- andererseits das oder die zweiten Gitter (23) gleitend bezüglich der beweglichen Abdeckung (14) entlang der Längsachse (104) in der ersten Sperrposition freizugeben, und das oder die zweiten Gitter (23) bezüglich der beweglichen Abdeckung (14) entlang der Längsachse (104) in der zweiten Sperrposition gleitend zu sperren.

10. Gondel (10A) nach einem der Ansprüche 6 bis 9, wobei der Betätigungsmechanismus mindestens ein zweites Sperrglied (25) aufweist, das dazu ausgeführt ist:
- einerseits das oder die ersten Gitter (15) gleitend bezüglich der ringförmigen Umhüllung (11) entlang der Längsachse (104) in einer dritten Sperrposition freizugeben, und das oder die ersten Gitter (15) gleitend bezüglich der ringförmigen Umhüllung (11) entlang der Längsachse (104) zu sperren, wobei sich das oder die ersten Gitter (15) in der zurückgezogenen Stellung in einer vierten Sperrposition befinden,
- andererseits das oder die zweiten Gitter (23) gleitend bezüglich der ringförmigen Umhüllung (11) entlang der Längsachse (104) zu sperren, wobei sich das oder die zweiten Gitter (23) in der zurückgezogenen Stellung in der dritten Sperrposition befinden, und das oder die zweiten Gitter (23) gleitend bezüglich der ringförmigen Umhüllung (11) entlang der Längsachse (104) in der vierten Sperrposition freizugeben.

11. Bypass-Turbomaschine (100) eines Flugzeugs, die von stromaufwärts nach stromabwärts entlang einer axialen Strömungsrichtung eines Gases ein Gebläse (102) und eine Trenndüse aufweist, aus der ein Strömungskanal für die ringförmige primäre Strömung, eine sogenannte primäre Ader, und ein Strömungskanal für die ringförmige sekundäre Strömung (105), eine sogenannte sekundäre Ader, die die primäre Ader umgibt, kommen, wobei die Turbomaschine (100) außerdem mit einer Gondel (10A, 10B, 10C) nach einem der Ansprüche 1 bis 10 ummantelt ist.

12. Flugzeug mit mindestens einer Bypass-Turbomaschine nach Anspruch 11.

## Claims

1. Nacelle (10A) for an aircraft bypass turbomachine (100) wherein an intake air stream (101) flows in the upstream to downstream direction, separating into a primary flow channel and a secondary flow channel (105), the nacelle (10A, 10B, 10C) comprising:
- a fixed annular envelope (11) extending about a longitudinal axis (104) of the nacelle,
- a thrust reverser (13) comprising:
∘ an annular movable cowl (14) extending about the longitudinal axis (104) and located downstream of the annular envelope (11), the movable cowl (14) being able to slide relative to the annular envelope (11) along the longitudinal axis (104) between a closed position, wherein the movable cowl (14) and the annular envelope (11) jointly define an annular and continuous outer surface (16) of the nacelle (10A, 10B, 10C), and an open position wherein the movable cowl (14) and the annular envelope (11) define therebetween an opening (17) oriented radially relative to the longitudinal axis (104), said opening (17) extending circumferentially about the longitudinal axis (104),
∘ at least one first movable thrust-reversing cascade (15), capable of occupying a retracted position wherein, with the movable cowl (14) in the closed position, the first cascade is housed inside the annular envelope (11), and an extended position wherein, with the movable cowl (14) in the open position, the first cascade extends across the opening (17), such that at least a part of the secondary stream is capable of passing through the first cascade in the extended position in order to emerge outside the nacelle (10A) with a velocity that is oriented so as to generate a negative thrust along the longitudinal axis (104),
the movable cowl (14) and the or each first cascade (15) being connected to an actuating mechanism capable of moving them together,
the nacelle (10A) being **characterised in that** said actuating mechanism is designed to allow for a partial or total thrust-cancelling configuration of the thrust reverser (13) wherein the movable cowl (14) is moved into the open position thereof while holding the or each first cascade (15) in the retracted position thereof, and **in that** in said thrust-cancelling configuration, the opening (17) is occupied by at least one second thrust-reducing cascade (23) of the thrust reverser (13), in such a way that the secondary stream passing through the opening (17) emerges outside the nacelle with a velocity that is oriented so as to generate a substantially zero or positive thrust along the longitudinal axis (104).

2. Nacelle (10A) according to claim 1, wherein the actuating mechanism is designed to selectively:
- move the movable cowl (14) and the one or more first cascades (15) by sliding along the longitudinal axis (104) respectively from the closed position into the open position and from the retracted position into the extended position;
- hold the one or more first cascades (15) in the retracted position and move the movable cowl (14) by sliding along the longitudinal axis (104) between the closed position and the open position.

3. Nacelle (10A) according to claim 2, wherein the actuating mechanism comprises at least one first actuator (22) designed to cause the movable cowl (14) to slide along the longitudinal axis (104) between the closed position and the open position.

4. Nacelle (10A) according to claim 3, wherein the actuating mechanism comprises at least one first blocking member (24) designed to block the one or more first cascades (15) from sliding relative to the movable cowl (14) along the longitudinal axis (104), in a first blocking position, and to unblock the one or more first cascades (15) such that they can slide relative to the movable cowl (14) along the longitudinal axis (104), in a second blocking position.

5. Nacelle (10A) according to claim 3 or claim 4, wherein the actuating mechanism comprises at least one second blocking member (25) designed to unblock the one or more first cascades (15) such that they can slide relative to the annular envelope (11) along the longitudinal axis (104), in a third blocking position, and to block the one or more first cascades (15) from sliding relative to the annular envelope (11) along the longitudinal axis (104), the one or more first cascades (15) being in the retracted position, in a fourth blocking position.

6. Nacelle (10A) according to one of claims 1 to 5, wherein the or each second thrust-reducing cascade (23) is designed to selectively:
- occupy a retracted position wherein it is housed inside the annular envelope (11) of the nacelle, said second cascade (23) in the retracted position being radially superimposed relative to the longitudinal axis (104) with a first cascade (15) when the movable cowl (14) is in the closed position;
- remain in the retracted position when the movable cowl (14) and the first cascade (15) slide respectively from the closed position into the open position and from the retracted position into the extended position;
- slide relative to the annular envelope (11) of the nacelle along the longitudinal axis (104) from the retracted position into an extended position wherein the second cascade (23) occupies the opening (17) defined between the movable cowl (14) and the annular envelope (11), when the first cascade (15) is in the retracted position and when the movable cowl (14) slides from the closed position into the open position.

7. Nacelle (10A) according to claim 6, wherein the one or more second cascades (23) are arranged radially outside the one or more first cascades (15) relative to the longitudinal axis (104).

8. Nacelle (10A) according to claim 6 or claim 7, wherein the actuating mechanism is designed to selectively:
- hold the one or more second cascades (23) in the retracted position and move the movable cowl (14) and the one or more first cascades (15) by sliding along the longitudinal axis (104) respectively from the closed position into the open position and from the retracted position into the extended position;
- hold the one or more first cascades (15) in the retracted position and move the movable cowl (14) and the one or more second cascades (23) by sliding along the longitudinal axis (104) respectively from the closed position into the open position and from the retracted position into the extended position.

9. Nacelle (10A) according to one of claims 6 to 8, wherein the actuating mechanism comprises at least one first blocking member (24) designed to:
- on the one hand block the one or more first cascades (15) from sliding relative to the movable cowl (14) along the longitudinal axis (104), in a first blocking position, and unblock the one or more first cascades (15) such that they can slide relative to the movable cowl (14) along the longitudinal axis (104), in a second blocking position; and
- on the other hand, unblock the one or more second cascades (23) such that they can slide relative to the movable cowl (14) along the longitudinal axis (104), in the first blocking position, and block the one or more second cascades (23) from sliding relative to the movable cowl (14) along the longitudinal axis (104), in the second blocking position.

10. Nacelle (10A) according to one of claims 6 to 9, wherein the actuating mechanism comprises at least one second blocking member (25) designed to:
- on the one hand, unblock the one or more first cascades (15) such that they can slide relative to the annular envelope (11) along the longitudinal axis (104), in a third blocking position, and block the one or more first cascades (15) from sliding relative to the annular envelope (11) along the longitudinal axis (104), the one or more first cascades (15) being in the retracted position, in a fourth blocking position;
- on the other hand, block the one or more second cascades (23) from sliding relative to the annular envelope (11) along the longitudinal axis (104), the one or more second cascades (23) being in the retracted position, in the third blocking position, and unblock the one or more second cascades (23) such that they can slide relative to the annular envelope (11) along the longitudinal axis (104), in the fourth blocking position.

11. Aircraft bypass turbomachine (100) comprising, upstream to downstream in an axial direction of flow of a gas, a fan (102) and a separation nozzle from which emerge an annular primary flow channel, referred to as the primary flow path, and an annular secondary flow channel (105), referred to as the secondary flow path, surrounding the primary flow path, the turbomachine (100) furthermore being ducted by a nacelle (10A, 10B, 10C) according to one of claims 1 to 10.

12. Aircraft comprising at least one bypass turbomachine according to claim 11.
